(19) Europäisches Patentamt

European Patent Office

Office européen des brevets

(11) **EP 1 641 285 A1**

(12) **EUROPEAN PATENT APPLICATION**
published in accordance with Art. 158(3) EPC

(43) Date of publication:
**29.03.2006 Bulletin 2006/13**

(51) Int Cl.:
***H04N 9/07*** *(1974.07)*

(21) Application number: **04747070.3**

(22) Date of filing: **30.06.2004**

(86) International application number:
**PCT/JP2004/009601**

(87) International publication number:
**WO 2005/013622 (10.02.2005 Gazette 2005/06)**

(84) Designated Contracting States:
**DE FR GB**

(30) Priority: **30.06.2003 JP 2003186629**

(71) Applicant: **NIKON CORPORATION**
**Tokyo 100-8331 (JP)**

(72) Inventors:
• **CHEN, ZheHong**
**Chiyoda-ku,**
**Tokyo 1008331 (JP)**

• **ISHIGA, Kenichi**
**Chiyoda-ku,**
**Tokyo 1008331 (JP)**

(74) Representative: **Volpert, Marcus et al**
**Zeitler - Volpert - Kandlbinder**
**Patentanwälte**
**Herrnstrasse 44**
**80539 München (DE)**

(54) **IMAGE PROCESSING DEVICE FOR PROCESSING IMAGE HAVING DIFFERENT COLOR COMPONENTS ARRANGED, IMAGE PROCESSING PROGRAM, ELECTRONIC CAMERA, AND IMAGE PROCESSING METHOD**

(57) An image processing apparatus of the present invention converts a first image composed of one of first to nth color components (n ≥ 2) arranged on each pixel, into a second image composed of all the first to nth components arranged entirely on each pixel. A smoothing unit of this image processing apparatus applies smoothing to a pixel position of the first color component in the first image, using the first color component of the surrounding pixels, and outputs the first color component having been smoothed as the first color component in the pixel position of the second image. This smoothing unit further includes a control unit that changes the characteristic of a smoothing filter in accordance with an imaging sensitivity at which the first image is captured.

FIG. 5

**Description**

*TECHNICAL FIELD*

The present invention relates to an image processing technique for converting a first image (for example, RAW data) having color components arranged mixedly, to generate a second image having at least one kind of components arranged on each pixel.

*TECHNOLOGICAL BACKGROUND*

(Prior Art 1)

Conventionally, there have been known electronic cameras that perform spatial filtering such as edge enhancement and noise removal.

Spatial filtering of this type is typically applied to luminance and chrominance planes YCbCr (the luminance component Y in particular), after RAW data (for example, Bayer array data) output from a single-plate image sensor is subjected to color interpolation and the luminance and chrominance planes YCbCr are subjected to color system conversion processing. For example, one of known typical noise removal filters is a ε-filter.

However, this processing has had a problem in complicating the image processing since the color interpolation, the color system conversion processing, and the spatial filtering must be performed separately. There have thus been problems such as extended processing time for the RAW data. The complexity of the image processing has also produced another problem that image processing ICs to be mounted on the electronic cameras are to be complex in configuration.

Furthermore, these processings (the color interpolation, the color system conversion processing, and the spatial filtering) are applied to a single image step by step, which causes another problem that minute image information can be lost easily in the course of the cumulative processes.

(Prior Art 2)

When color interpolation is performed on RAW data of a single-plate image sensor, original signals in the RAW data and interpolation signals generated by averaging the original signals are usually arranged on a single plane. Here, the original signals and the interpolation signals slightly differ in spatial frequency characteristics.

In US Patent No. 5596367 (hereinafter, referred to as patent document 1), low-pass filter processing is applied to the original signals alone so as to reduce the differences in the spatial frequency characteristics between the original signals and the interpolation signals.

In this processing, however, the low-pass filter processing is applied to the original signals by using the interpolation signals adjoining to the original signals. In other words, this processing still involves the step-by-step application of color interpolation and spatial filtering. It is also disadvantageous that minute image information can be lost easily.

(Prior Art 3)

The inventors of the present invention previously filed an international application, International Patent Publication No. WO 02/21849 (hereinafter, referred to as patent document 2). The international application discloses an image processing apparatus which applies color system conversion processing directly to RAW data.

In this processing, color system conversion is performed by performing weighted addition of the RAW data according to a coefficient table. This coefficient table can contain in advance fixed coefficient terms intended for edge enhancement and noise removal. No particular mention has been made therein, however, of the technique for creating another groups of coefficient tables having different spatial frequency characteristics in advance and switching the groups of coefficient tables as needed, as in the embodiments to be described later.

(Problem with Imaging Sensitivity)

Typical electronic cameras can change the imaging sensitivity of their image sensor (for example, the amplifier gain of the image sensor output). This change in the imaging sensitivity causes large variations in the noise amplitude of the captured images. Patent documents 1 and 2 have not described the technique of changing a conversion filter for the first image in accordance with the imaging sensitivity, as in the embodiments to be described later. Therefore, over-blurring may occur for low sensitivity images with high S/N due to excessive smoothing by the conversion filter, whereas color artifacts may be closed up or granularity may be left for high sensitivity images with low S/N due to inadequate smoothing by the conversion filter.

*DISCLOSURE OF THE INVENTION*

In view of solving the foregoing problems, it is an object of the present invention to easily, efficiently perform sophisticated spatial filtering conforming to image structures.

Another object of the present invention is to provide an image processing technique for realizing appropriate noise removal while maintaining resolution and contrast regardless of changes in the imaging sensitivity.

Hereinafter, description will be given of the present invention.

(1) An image processing apparatus of the present invention is an image processing apparatus for converting a first image composed of any one of first to nth color components (n ≥ 2) entirely arranged on each pixel, into a second image composed of all of the first to nth color components arranged on each pixel.
This image processing apparatus includes a smoothing unit. This smoothing unit smoothes a pixel position of the first color component in the first image, using the first color components of pixels adjacent to the pixel position. The smoothing unit outputs the first color component having been smoothed as the first color component in the pixel position of the second image. The smoothing unit further includes a control unit. The control unit changes a characteristic of a smoothing filter in accordance with an imaging sensitivity at which the first image is captured. Such processing makes it possible to obtain noise removal effects of high definition adaptable to changes in the imaging sensitivity.

(2) Preferably, among the first to nth color components, the first color component is a color component that carries a luminance signal.

(3) It is also preferable that the first to nth color components are red, green, and blue, and the first color component is green.

(4) The control unit preferably changes a size (a range of pixels to be referred)of the filter in accordance with the imaging sensitivity.

(5) It is also preferable that the control unit changes coefficient values (contribution ratios of pixel components to be referred among pixels around a smoothing target pixel) of the filter in accordance with the imaging sensitivity.

(6) The smoothing unit preferably includes a similarity judgment unit and a switching unit. This similarity judgment unit judges a magnitude of similarity among pixels in a plurality of directions. Meanwhile, the switching unit switchingly outputs the first color component of the first image simply and the first color component having been smoothed as the first color component of the second image, according to a result of the judgment.

(7) It is also preferable that the similarity judgment unit judges similarity by calculating similarity degrees among pixels at least in four directions.

(8) Another image processing apparatus of the present invention is an image processing apparatus for converting a first image composed of any one of first to nth color components (n ≥ 2) arranged on each pixel, into a second image composed of at least one signal component arranged entirely on each pixel.
This image processing apparatus includes a signal generating unit. The signal generating unit generates a signal component of the second image by performing weighted addition of color components in the first image. This signal generating unit further includes a control unit. The control unit changes weighting coefficients for the weighted addition in accordance with an imaging sensitivity at which the first image is captured, the weighting coefficients being used for adding up the color components of the first image.

(9) The signal generating unit preferably generates a signal component different from the first to nth color components.

(10) It is also preferable that the signal generating unit generates a luminance component different from the first to nth color components.

(11) The control unit preferably changes the weighting coefficients for a pixel position of the first color component in the first image in accordance with the imaging sensitivity.

(12) It is also preferable that the control unit changes a range of the weighted addition in accordance with the imaging sensitivity.

(13) The control unit preferably changes the weighting coefficients within the identical range in accordance with the imaging sensitivity.

(14) It is also preferable that the signal generating unit has a similarity judgment unit. This similarity judgment unit judges a magnitude of similarity among pixels in a plurality of directions. The control unit also changes the weighting coefficients in accordance with the similarity judgment in addition to the imaging sensitivity.

(15) The control unit preferably executes weighted addition of a color component originally existing on a pixel to be processed in the first image and the same color component existing on the surrounding pixels when a result of the judgment indicates no distinctive similarity in any direction or higher similarity than a predetermined level in all of the directions.

(16) It is also preferable that the similarity judgment unit judges similarity by calculating similarity degrees among pixels at least in four directions.

(17) Another image processing apparatus of the present invention is an image processing apparatus for converting a first image composed of a plurality of kinds of color components mixedly arranged on a pixel array, to generate a second image composed of at least one kind of signal component (hereinafter, new component) arranged entirely on each pixel. The color components constitute a color system.

This image processing apparatus includes a similarity judgment unit, a coefficient selecting unit, and a conversion processing unit. Initially, the similarity judgment unit judges similarity of a pixel to be processed along a plurality of directions in the first image. The coefficient selecting unit selects a predetermined coefficient table in accordance with a result of the judgment on the similarity having been made by the similarity judgment unit. The conversion processing unit performs weighted addition of the color components in a local area including the pixel to be processed based on the coefficient table having been selected, thereby generating the new component. In particular, the coefficient selecting unit described above selects a different coefficient table having a different spatial frequency characteristic in accordance with an analysis of an image structure based on the similarity. Changing the coefficient table thus achieves an adjustment to a spatial frequency component of the new component.

As has been described, according to the present invention, the coefficient table is switched to one with a different spatial frequency characteristic in accordance with the similarity-based analysis of the image structure, so as to adjust the spatial frequency component of the new component to be generated.

Such an operation eliminates the need for step-by-step processing of generating the new component once before subjecting this new component to spatial filtering as in the prior art. Accordingly, the steps of the image processing can be simplified efficiently.

Moreover, the similarity used for generating the new component is also used to fulfill the analysis of the image structure, which makes the processing efficient to achieve sophisticated spatial filtering in consideration of the image structure easily.

Furthermore, in this processing, the generation of the new component and the adjustment to the spatial frequency component based on the analysis of the image structure are achieved by a single weighted addition. Minute image information is thus less likely to be lost as compared to the cases where the arithmetic processing is divided and repeated a plurality of times.

According to the present invention, weighting ratios of the color components are preferably associated with weighting ratios for color system conversion. This can eliminate the need for conventional color interpolation, and complete the color system conversion processing and the spatial filtering in consideration of the image structure by a single weighted addition By such processing, it is possible to significantly simplify and accelerate the image processing on, for example, RAW data or the like which has taken a long time heretofore.

(18) The coefficient selecting unit preferably analyzes the image structure of pixels near the pixel to be processed, based on a result of judgment on a magnitude of the similarity. In accordance with the analysis, the coefficient selecting unit selects a different coefficient table having a different spatial frequency characteristic.

(19) It is also preferable that the coefficient selecting unit selects a different coefficient table having a different array size. Selecting one in the different array size is to select one with a different spatial frequency characteristic.

(20) The coefficient selecting unit preferably selects a different coefficient for a higher level of noise removal to suppress a high frequency component of the signal component greatly and/or over a wider bandlength, when the similarity is judged to be substantially uniform in the plurality of directions and judged to be high from the analysis of an image structure.

(21) It is also preferable that the coefficient selecting unit selects a different coefficient table for a higher level of noise removal to suppress a high frequency component of the signal component greatly and/or over a wider bandlength, when the similarity is judged to be substantially uniform in the plurality of directions and judged to be low from the analysis of an image structure.

(22) The coefficient selecting unit preferably selects a different coefficient table for a higher level of edge enhancement to enhance a high frequency component of the signal component in a direction of low similarity, when a difference in the magnitude of the similarity in the directions is judged to be large from the analysis of an image structure.

(23) It is also preferable that the coefficient selecting unit selects a different coefficient table for a higher level of edge enhancement to enhance a high frequency component of the signal component in a direction of low similarity, when a difference in the magnitude of the similarity in the directions is judged to be small from the analysis of the image structure.

(24) The coefficient selecting unit preferably selects a different coefficient table for a higher level of noise removal such that the higher the imaging sensitivity at which the first image is captured is, the higher the level of noise removal through the selected coefficient table is.

(25) It is also preferable that weighting ratios between the color components are to be substantially constant before and after selecting the different coefficient table.

(26) Preferably, the weighting ratios between the color components are intended for color system conversion.

(27) Another image processing apparatus of the present invention includes a smoothing unit and a control unit. The smoothing unit smoothes image data by performing weighted addition on a pixel to be processed and the surrounding pixels in the image data. Meanwhile, the control unit changes a referential range of the surrounding pixels in accordance with an imaging sensitivity at which this image data is captured.

(28) An image processing program of the present invention enables a computer to operate as an image processing apparatus according to any one of (1) to (27) above.

(29) An electronic camera of the present invention includes: an image processing apparatus according to any one of (1) to (27) above; and an image sensing unit capturing a subject and generating a first image. In this electronic camera, the image processing apparatus processes the first image captured by the image sensing unit to generate a second image.

(30) An image processing method of the present invention is for converting a first image composed of any one of first to nth color components ($n \geq 2$) arranged on each pixel, into a second image composed of at least one signal component arranged entirely on each pixel. This image processing method includes the step of generating the signal component of the second image by performing weighted addition of color components in the first image. In particular, the step of generating this signal component includes the step of changing weighting coefficients for the weighted addition in accordance with an imaging sensitivity at which the first image is captured. The weighting coefficients are used for adding up the color components in the first image with a weight.

(31) Another image processing method of the present invention is for converting a first image composed of a plurality of kinds of color components mixedly arranged on a pixel array, to generate a second image composed of at least one kind of signal component (hereinafter, as new component) arranged entirely on each pixel. The color components constitute a color system. This image processing method has the following steps:

[S1] the step of judging image similarity of a pixel to be processed along a plurality of directions in the first image;
[S2] the step of selecting a predetermined coefficient table in accordance with a result of the judgment on similarity in the step of judging similarity; and
[S3] the step of performing weighted addition of the color components in a local area including the pixel to be processed according to the coefficient table having been selected, thereby generating the new component.

In particular, in the foregoing coefficient table selecting step, a different coefficient table having a different spatial frequency characteristic is selected in accordance with an analysis of an image structure based on the similarity, thereby adjusting the spatial frequency component of the new component.

*BRIEF DESCRIPTION OF THE DRAWINGS*

The foregoing objects and other objects of the present invention can be seen easily from the following description and the accompanying drawings, in which:

Fig. 1 shows the configuration of an electronic camera 1;
Fig. 2 is a flowchart showing a rough operation for color system conversion processing;
Fig. 3 is a flowchart showing the operation for setting an index HV;
Fig. 4 is a flowchart showing the operation for setting an index DN;
Fig. 5 is a flowchart (1 /3) showing the processing for generating a luminance component;
Fig. 6 is a flowchart (2/3) showing the processing for generating a luminance component;
Fig. 7 is a flowchart (3/3) showing the processing for generating a luminance component;
Fig. 8 shows the relationship between the indices (HV,DN) and the directions of similarity;
Fig. 9 shows an example of coefficient tables;
Fig. 10 shows an example of coefficient tables;
Fig. 11 shows an example of coefficient tables;
Fig. 12 shows an example of coefficient tables;
Fig. 13 shows an example of coefficient tables;
Fig. 14 is a flowchart for explaining an operation for RGB color interpolation;
Fig. 15 shows an example of coefficient tables;
Fig. 16 shows an example of coefficient tables; and
Fig. 17 is a flowchart for explaining an operation for RGB color interpolation.

*BEST MODE FOR CARRYING OUT THE INVENTION*

\*\*\* First Embodiment \*\*\*

Hereinafter, a first embodiment according to the present invention will be described with reference to the drawings.

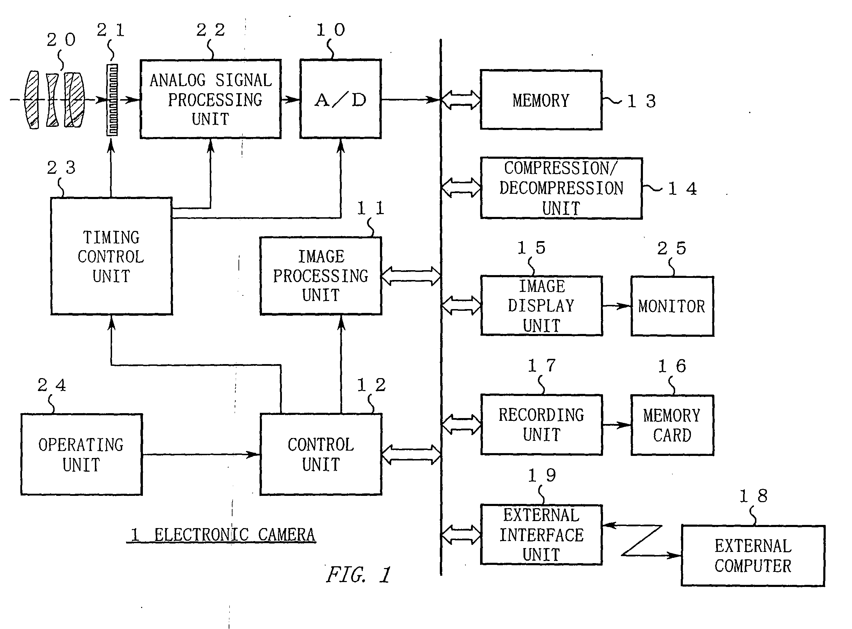

Fig. 1 is a block diagram of an electronic camera 1 corresponding to the first embodiment.

In Fig. 1, a lens 20 is mounted on the electronic camera 1. The image-forming plane of an image sensor 21 is located in the image focal space of this lens 20. A Bayer-array RGB primary color filter is placed on this image-forming plane. An image signal output from this image sensor 21 is converted into digital RAW data (corresponding to a first image) through an analog signal processing unit 22 and an A/D conversion unit 10 before temporarily stored into a memory 13 via a bus.

This memory 13 is connected with an image processing unit (for example, a single-chip microprocessor dedicated to image processing) 11, a control unit 12, a compression/decompression unit 14, an image display unit 15, a recording unit 17, and an external interface unit 19 via the bus.

The electronic camera 1 is also provided with an operating unit 24, a monitor 25, and a timing control unit 23. Moreover, the electronic camera 1 is loaded with a memory card 16. The recording unit 17 compresses and records processed images onto this memory card 16.

The electronic camera 1 can also be connected with an external computer 18 via the external interface unit 19 (USB or the like).

[Relationship with Claims]

Now, description will be given of the relationship between claims and the first embodiment. The following relationship is intended to illustrate an interpretation for reference purpose, not to limit the present invention.

The similarity judgment unit set forth in claims corresponds to a function of determining similarities in horizontal, vertical, and diagonal directions and classifying individual pixels of the RAW data into cases 1 to 12 (to be described later) in accordance with a directional judgment on these similarities of the image processing unit 11.

The coefficient selecting unit set forth in claims corresponds to a function of switching and using groups of coefficient tables having different special frequency characteristics based on a judgment on magnitudes of similarity and the like, and a function of selecting a coefficient table from among a group of coefficient tables in accordance with cases 1 to 12 of the image processing unit 11.

The conversion processing unit set forth in claims corresponding to a function of performing weighted addition of color components in a local area of the RAW data in accordance with the coefficient table and thereby determining a new component (here, luminance component) of the image processing unit 11.

The first image set forth in claims corresponds to the RAW data.

The second image set forth in claims corresponds to image data after color system conversion.

[Description of Operation of First Embodiment]

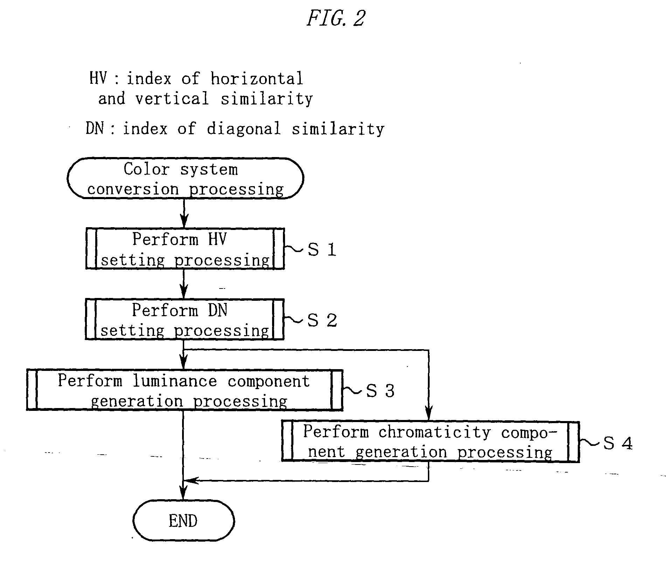

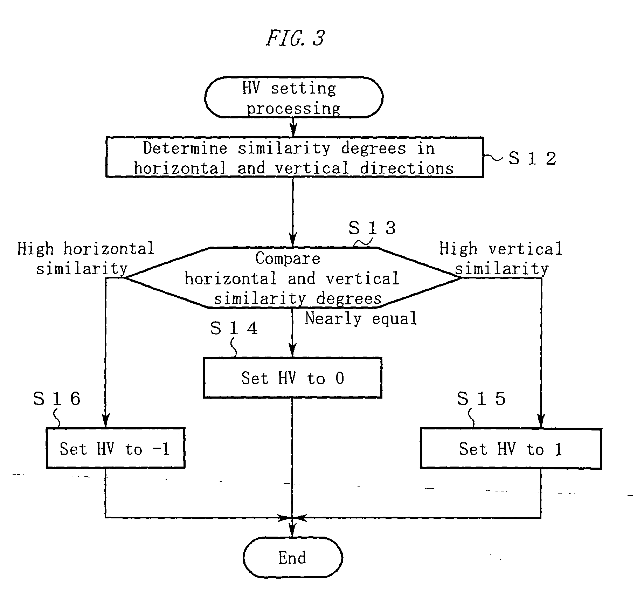

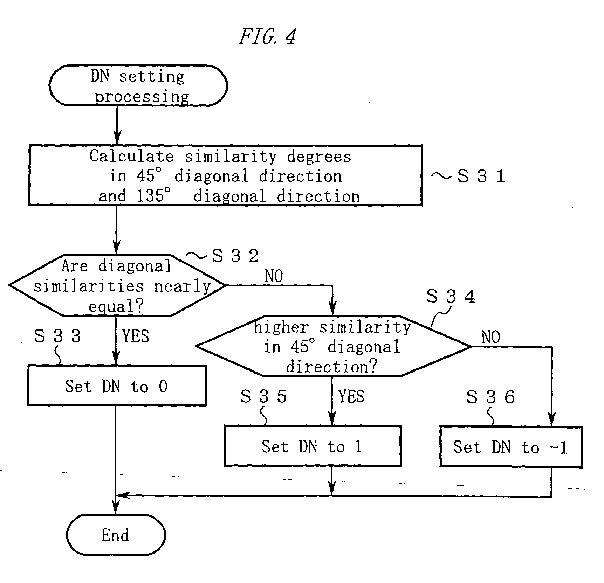

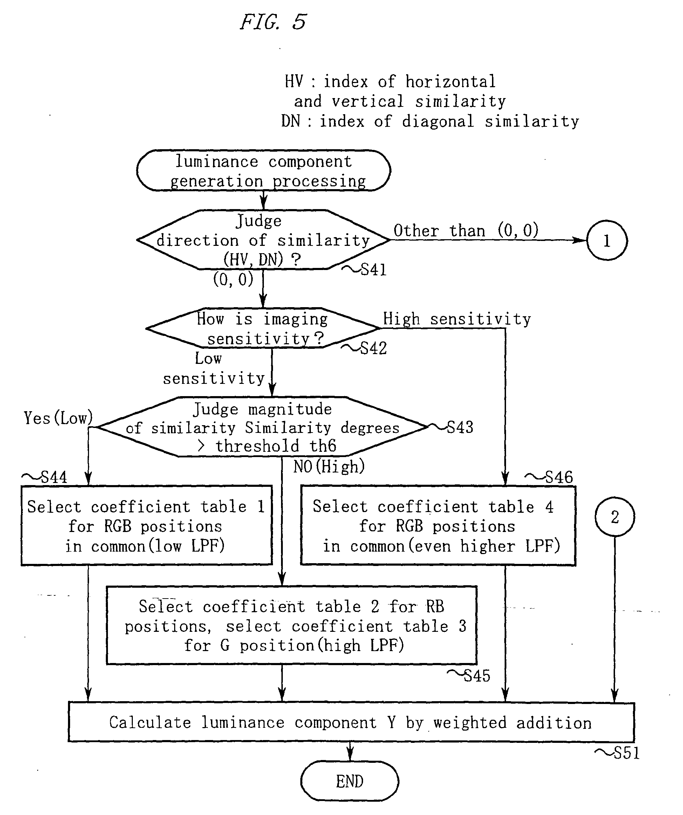

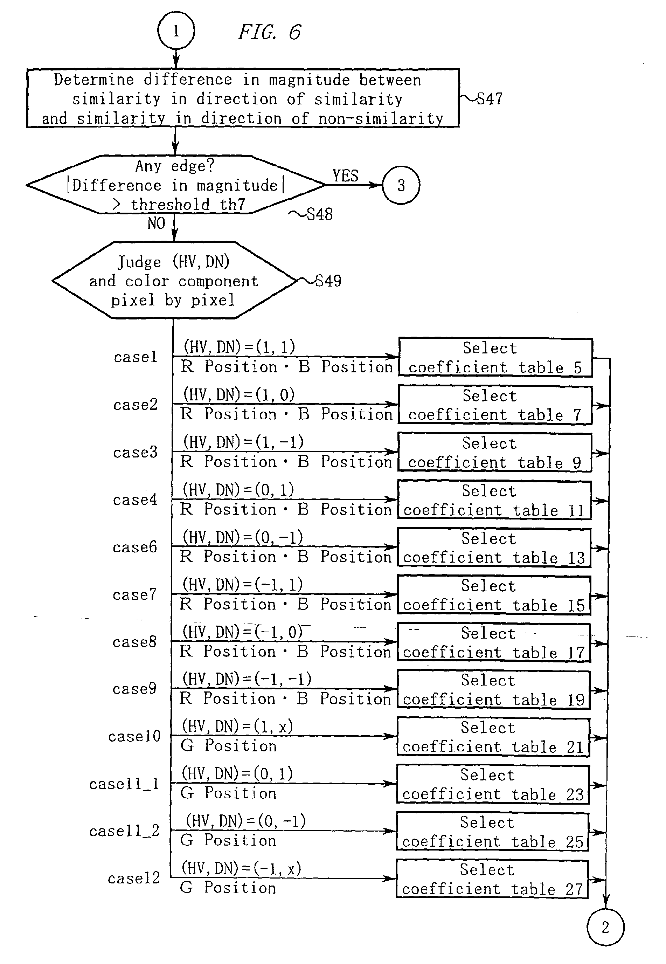

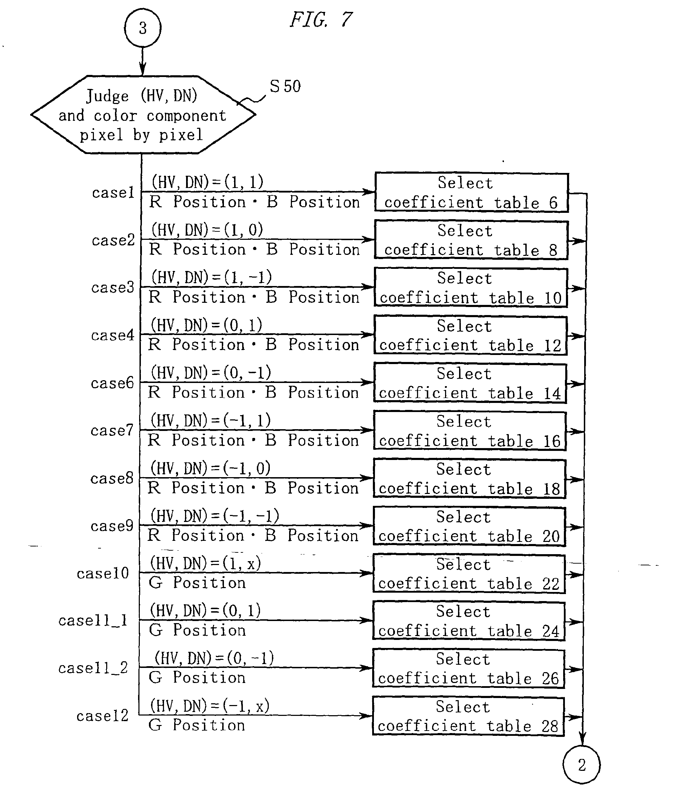

Figs. 2 to 7 are operational flowcharts of the image processing unit 11. Fig. 2 shows a rough flow for color system conversion. Figs. 3 and 4 show the operations of setting indices (HV,DN) for determining the direction of similarity. Moreover, Figs. 5 to 7 show the processing for generating a luminance component.

Referring to Fig. 2, description will initially be given of a rough operation for color system conversion.

The image processing unit 11 makes a direction judgment on similarity in the horizontal and vertical directions around a pixel to be processed on the RAW data plane, thereby determining an index HV (steps S1). This index HV is set to "1" when the vertical similarity is higher than the horizontal, set to "-1" when the horizontal similarity is higher than the vertical, and set to "0" when the vertical and horizontal similarities are indistinguishable.

Moreover, the image processing unit 11 makes a direction judgment on similarity in the diagonal directions around the pixel to be processed on the RAW data plane, thereby determining an index DN (steps S2). This index DN is set to "1" when the similarity along a 45° diagonal direction is higher than that along a 135° diagonal direction, set to "-1" when the similarity along a 135° diagonal direction is higher than that along a 45° diagonal direction, and set to "0" when these similarities are indistinguishable.

Next, the image processing unit 11 performs luminance component generation processing (step S3) while performing chromaticity component generation processing (step S4).

Since the chromaticity (chrominance) component generation processing is detailed in the embodiment of the foregoing patent document 2, description thereof will be omitted here.

Hereinafter, concrete description will be given of the operations of the processing for setting the index HV, the processing for setting the index DN, and the luminance component generation processing in order.

<< Processing for Setting Index HV >>

Initially, the processing for calculating the index HV[i,j] will be described with reference to Fig. 3. In the following equations, color components R and B will be generically expressed as "Z".
Step S12: The image processing unit 11 initially calculates difference values between pixels in the horizontal and vertical directions at coordinates [i,j] on the RAW data as similarity degrees.
For example, the image processing unit 11 calculates a vertical similarity degree Cv[i,j] and a horizontal similarity degree Ch[i,j] by using the following equations 1 to 4. (The absolute values || in the equations may be replaced with squares or other operations.)

(1) If the coordinates [i,j] fall on an R position or B position:

$$Cv[i,j] = (|G[i,j-1] - G[i,j+1]| + |G[i-1,j-2] - G[i-1,j]|$$

$$+ |G[i-1,j+2] - G[i-1,j]| + |G[i+1,j-2] - G[i+1,j]| + |G[i+1,j+2] - G[i+1,j]|$$

$$+ |Z[i,j-2] - Z[i,j]| + |Z[i,j+2] - Z[i,j]|) / 7, \text{ and } \quad \text{... Eq. 1}$$

$$Ch[i,j] = (|G[i-1,j] - G[i+1,j]| + |G[i-2,j-1] - G[i,j-1]|$$

$$+ |G[i+2,j-1] - G[i,j-1]| + |G[i-2,j+1] - G[i,j+1]| + |G[i+2,j+1] - G[i,j+1]|$$

$$+ |Z[i-2,j] - Z[i,j]| + |Z[i+2,j] - Z[i,j]|) / 7. \quad \text{... Eq. 2}$$

(2) If the coordinates [i,j] fall on a G position:

$$Cv[i,j] = (|G[i,j-2] - G[i,j]| + |G[i,j+2] - G[i,j]|$$

$$+ |G[i-1,j-1] - G[i-1,j+1]| + |G[i+1,j-1] - G[i+1,j+1]|$$

$$+ |Z[i,j-1] - Z[i,j+1]|) / 5, \text{ and } \quad \text{... Eq. 3}$$

$$Ch[i,j] = (|G[i-2,j] - G[i,j]| + |G[i+2,j] - G[i,j]|$$

$$+ |G[i-1,j-1] - G[i+1,j-1]| + |G[i-1,j+1] - G[i+1,j+1]|$$

$$+ |Z[i-1,j] - Z[i+1,j]|) / 5. \quad \text{... Eq. 4}$$

The smaller values the similarity degrees calculated thus have, the higher the similarities are.
Step S13: Next, the image processing unit 11 compares the similarity degrees in the horizontal and vertical directions.
Step S14: For example, when the following condition 2 holds, the image processing unit 11 judges the horizontal and vertical similarity degrees as being nearly equal, and sets the index HV[i,j] to 0.

$$|Cv[i,j] - Ch[i,j]| \le Th4 \quad \text{... condition 2}$$

In condition 2, the threshold Th4 functions to avoid either one of the similarities from being misjudged as being higher because of noise when the difference between the horizontal and vertical similarity degrees is small. For noisy color images, the threshold Th4 is thus preferably set to higher values.

Step S15: On the other hand, if condition 2 does not hold but the following condition 3 does, the image processing unit 11 judges the vertical similarity as being higher, and sets the index HV[i,j] to 1.

$$Cv[i,j] < Ch[i,j] \quad ... \text{ condition 3}$$

Step S16: Moreover, if neither of conditions 2 and 3 holds, the image processing unit 11 judges the horizontal similarity as being higher, and sets the index HV[i,j] to -1.

Note that the similarity degrees calculated here are for both R and B positions and G positions. For the sake of simplicity, however, it is possible to calculate the similarity degrees for R and B positions alone, and set the directional index HV at the R and B positions. The directional index at G positions may be determined by referring to HV values around. For example, the directional index at a G position may be determined by averaging the indices from four points adjoining the G position and converting the average into an integer.

<< Processing for Setting Index DN >>

Next, the processing for calculating the index DN[i,j] will be described with reference to Fig. 4.

Step S31: Initially, the image processing unit 11 calculates difference values between pixels in the 45° diagonal direction and the 135° diagonal direction at coordinates [i,j] on the RAW data as similarity degrees.

For example, the image processing unit 11 determines a similarity degree C45[i,j] in the 45° diagonal direction and a similarity degree C135[i,j] in the 135° diagonal direction by using the following equations 5 to 8.

(1) If the coordinates [i,j] fall on an R position or B position:

$$C45[i,j] = (|G[i-1,j] - G[i,j-1]| + |G[i,j+1] - G[i+1,j]|$$

$$+ |G[i-2,j-1] - G[i-1,j-2]| + |G[i+1,j+2] - G[i+2,j+1]|$$

$$+ |Z[i-1,j+1] - Z[i+1,j-1]|) / 5, \text{ and } \quad ... \text{ Eq. 5}$$

$$C135[i,j] = (|G[i-1,j] - G[i,j+1]| + |G[i,j-1] - G[i+1,j]|$$

$$+ |G[i-2,j+1] - G[i-1,j+2]| + |G[i+1,j-2] - G[i+2,j-1]|$$

$$+ |Z[i-1,j-1] - Z[i+1,j+1]|) / 5. \quad ... \text{ Eq. 6}$$

(2) If the coordinates [i,j] fall on a G position:

$$C45[i,j] = (|G[i-1,j+1] - G[i,j]| + |G[i+1,j-1] - G[i,j]|$$

$$+ |Z[i-1,j] - Z[i,j-1]| + |Z[i,j+1] - Z[i+1,j]|) / 4, \text{ and } \quad ... \text{ Eq. 7}$$

$$C135[i,j] = (|G[i-1,j-1] - G[i,j]| + |G[i+1,j+1] - G[i,j]|$$

$$+ |Z[i-1,j] - Z[i,j+1]| + |Z[i,j-1] - Z[i+1,j]|) / 4. \quad \text{... Eq. 8}$$

The smaller values the similarity degrees calculated thus have, the higher the similarities are.

Step S32: Having thus calculated the similarity degrees in the 45° diagonal direction and the 135° diagonal direction, the image processing unit 11 judges from these similarity degrees whether or not the similarity degrees in the two diagonal directions are nearly equal.

For example, such a judgment can be made by judging if the following condition 5 holds.

$$|C45[i,j] - C135[i,j]| \leq Th5 \quad \text{... condition 5}$$

The threshold Th5 functions to avoid either one of the similarities from being misjudged as being higher because of noise when the difference between the similarity degrees C45[i,j] and C135[i,j] in the two directions is small. For noisy color images, the threshold Th5 is thus preferably set to higher values.

Step S33: If such a judgment indicates that the diagonal similarities are nearly equal, the image processing unit 11 sets the index DN[i,j] to 0.

Step S34: On the other hand, if the direction of higher diagonal similarity is distinguishable, a judgment is made as to whether or not the similarity in the 45° diagonal direction is higher.

For example, such a judgment can be made by judging if the following condition 6 holds.

$$C45[i,j] < C135[i,j] \quad \text{... condition 6}$$

Step S35: Then, if the judgment at step S34 indicates that the similarity in the 45° diagonal direction is higher (when condition 5 does not hold but condition 6 does), the image processing unit 11 sets the index DN[i,j] to 1.

Step S36: On the other hand, if the similarity in the 135° diagonal direction is higher (when neither of conditions 5 and 6 holds), the index DN[i,j] is set to -1.

Note that the similarity degrees calculated here are for both R and B positions and G positions. For the sake of simplicity, however, it is possible to calculate the similarity degrees for R and B positions alone, and set the directional index DN at the R and B positions. The directional index at G positions may be determined by referring to DN values around. For example, the directional index at a G position may be determined by averaging the indices from four points adjoining the G position and converting the average into an integer.

« Luminance Component Generation Processing »

Next, the operation of the luminance component generation processing will be described with reference to Figs. 5 to 7.

Step S41: The image processing unit 11 judges whether or not the indices (HV,DN) of the pixel to be processed are (0,0).

Here, if the indices (HV,DN) are (0,0), it is possible to judge that the similarities are generally uniform both in the vertical and horizontal directions and in the diagonal directions, and the location indicates isotropic similarity. In this case, the image processing unit 11 moves the operation to step S42.

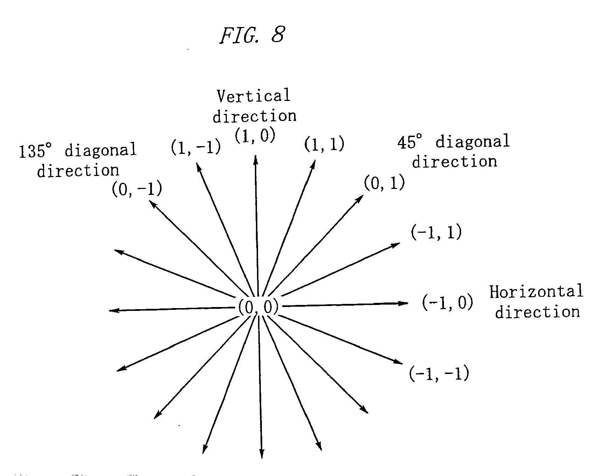

On the other hand, if the indices (HV,DN) are other than (0,0), it is possible to judge that the similarities in the horizontal and vertical directions or the diagonal directions are non-uniform and the location has directionality in the image structure as shown in Fig. 8. In this case, the image processing unit 11 moves the operation to step S47.

Step S42: The image processing unit 11 acquires, from the control unit 12, information on the imaging sensitivity (corresponding to the amplifier gain of the image sensor) at which the RAW data is captured.

If the imaging sensitivity is high (for example, equivalent to ISO 800 or above), the image processing unit 11 moves the operation to step S46.

On the other hand, if the imaging sensitivity is low, the image processing unit 11 moves the operation to step S43.

Step S43: The image processing unit 11 performs a judgment on the magnitudes of similarity. For example, such a magnitude judgment is made depending on whether or not any of the similarity degrees Cv[i,j] and Ch[i,j] used in calculating the index HV and the similarity degrees C45[i,j] and C135[i,j] used in calculating the index DN satisfies the

following condition 7:

$$\text{Similarity degree} > \text{threshold th6.} \quad \text{... condition 7}$$

Here, the threshold th6 is a boundary value for determining whether the location having isotropic similarity is a flat area or a location having significant relief information, and is set in advance in accordance with the actual values of the RAW data.

If condition 7 holds, the image processing unit 11 moves the operation to step S44.

On the other hand, if condition 7 does not hold, the image processing unit 11 moves the operation to step S45.

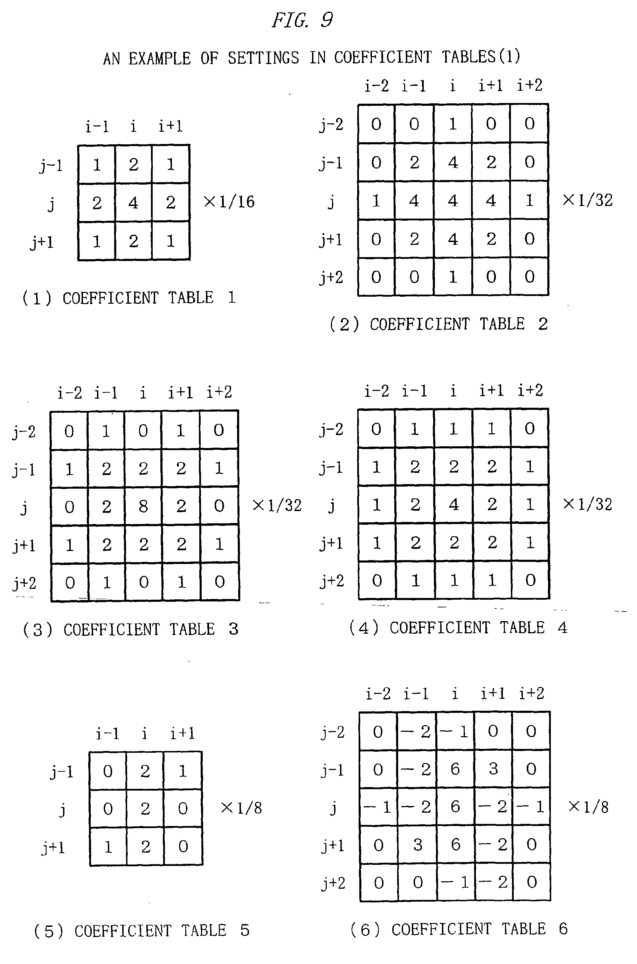

Step S44: Here, since condition 7 holds, it is possible to determine that the pixel to be processed has low similarity to its surrounding pixels, i.e., is a location having significant relief information. To keep this significant relief information, the image processing unit 11 then selects a coefficient table 1 (see Fig. 9) which shows a low LPF characteristic. This coefficient table 1 can be used for R, G, and B positions in common. After this selecting operation, the image processing unit 11 moves the operation to step S51.

Step S45: Here, since condition 7 does not hold, it is possible to determine that the pixel to be processed has high similarity to its surrounding pixels, i.e., is a flat area. In order to remove noise of small amplitudes noticeable in this flat area with reliability, the image processing unit 11 selects either one of coefficient tables 2 and 3 (see Fig. 9) for suppressing a wide band of high frequency components strongly. This coefficient table 2 is one to be selected when the pixel to be processed is in an R or B position. On the other hand, the coefficient table 3 is one to be selected when the pixel to be processed is in a G position.

After such a selecting operation, the image processing unit 11 moves the operation to step S51.

Step S46: Here, since the imaging sensitivity is high, it is possible to determine that the RAW data is low in S/N. Then, in order to remove the noise of the RAW data with reliability, the image processing unit 11 selects a coefficient table 4 (see Fig. 9) for suppressing a wider band of high frequency components more strongly. This coefficient table 4 is can be used for R, G, and B positions in common. After this selecting operation, the image processing unit 11 moves the operation to step S51.

Step S47: Here, the pixel to be processed has anisotropic similarity. Then, the image processing unit 11 determines a difference in magnitude between the similarity in the direction of similarity and the similarity in the direction of non-similarity.

For example, such a difference in magnitude can be determined from a difference or ratio between the vertical similarity degree $Cv[i,j]$ and the horizontal similarity degree $Ch[i,j]$ which are used in calculating the index HV. In another example, it can also be determined from a difference or ratio between the similarity degree $C45[i,i]$ in the 45° diagonal direction and the similarity degree $C135[i,j]$ in the 135° diagonal direction which are used in calculating the index DN.

Step S48: The image processing unit 11 makes a threshold judgement on the determined difference in magnitude, in accordance with the following condition 8.

$$|\text{Difference in magnitude}| > \text{threshold th7} \quad \text{... condition 8}$$

Note that the threshold th7 is a value for distinguishing whether or not the pixel to be processed has the image structure of an edge area, and is set in advance in accordance with the actual values of the RAW data.

If condition 8 holds, the image processing unit 11 moves the operation to step S50.

On the other hand, if condition 8 does not hold, the operation is moved to step S49.

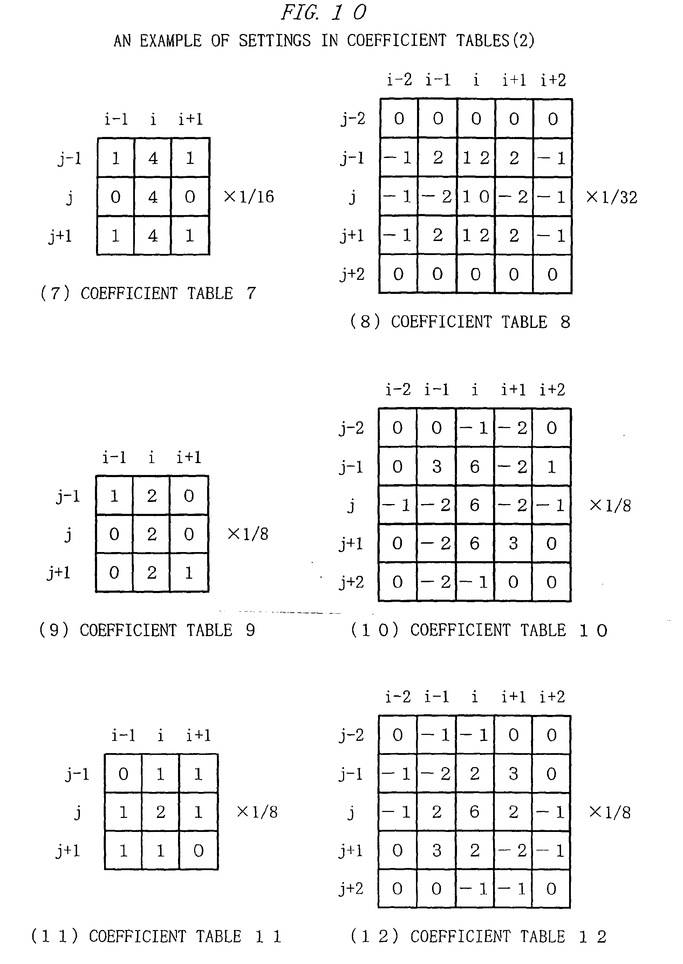

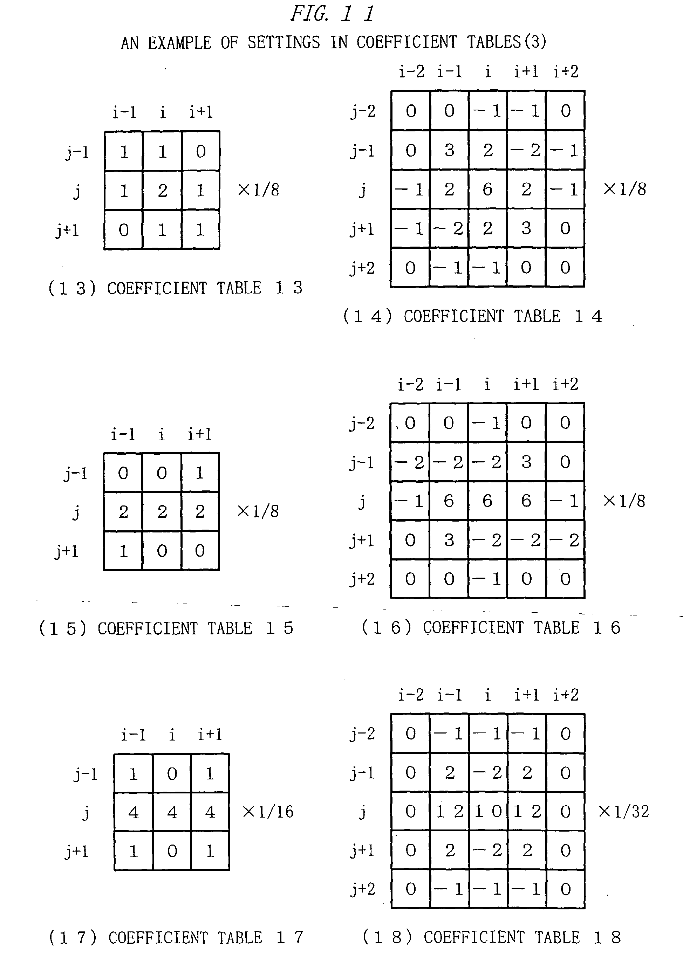

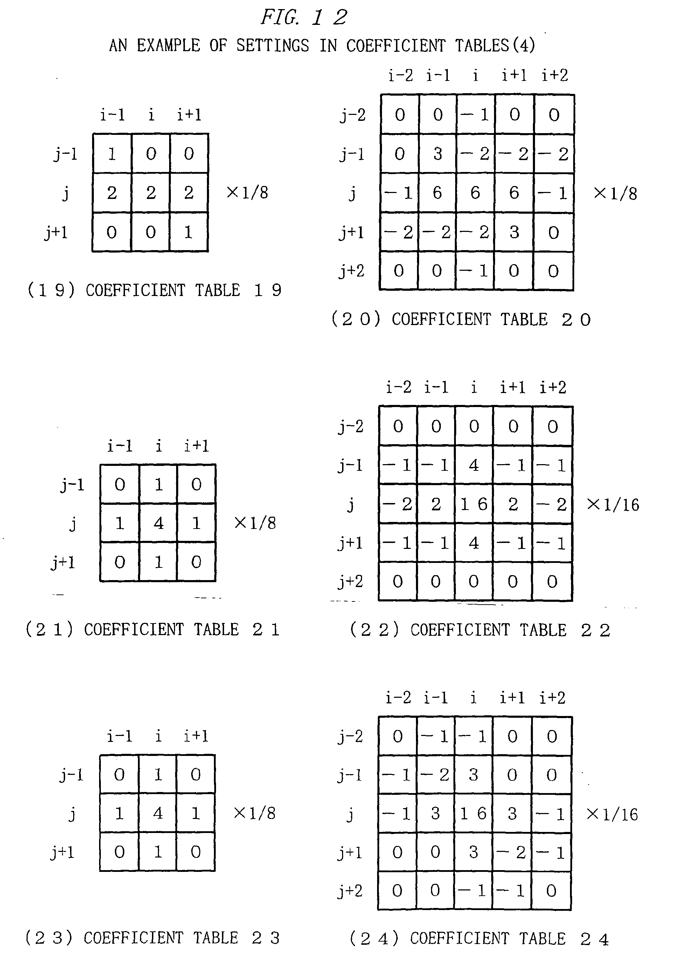

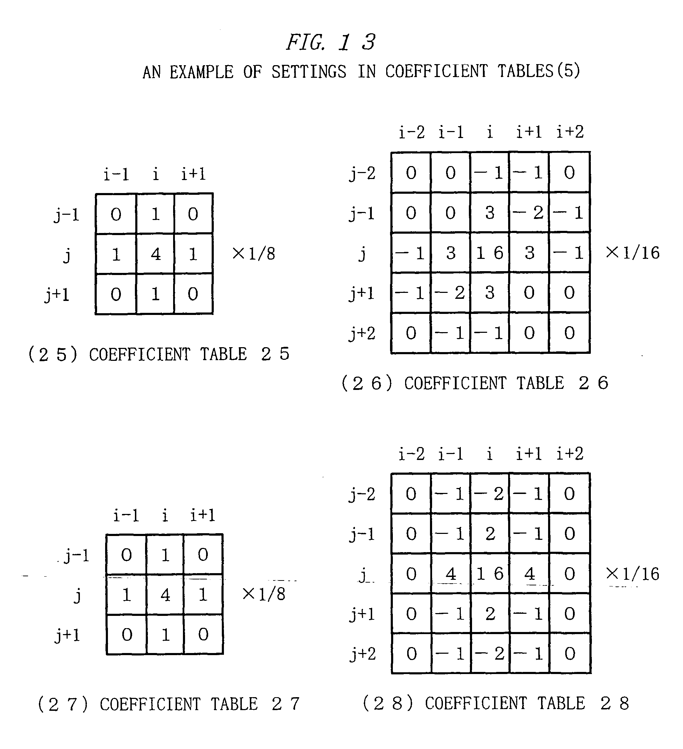

Step S49: Here, since condition 8 does not hold, the pixel to be processed is estimated not to be an edge area of any image. The image processing unit 11 then selects a coefficient table from among a group of coefficient tables for low edge enhancement (coefficient tables 5, 7, 9, 11, 13, 15, 17, 19, 21, 23, 25, and 27 having a matrix size of 3 x 3, shown in Figs. 9 to 13).

Specifically, the image processing unit 11 classifies the pixel to be processed among the following cases 1 to 12, based on the conditions of the judgment on the direction of the similarity by the indices (HV,DN) and the color component of the pixel to be processed in combination. "x" below may be any one of 1, 0, and -1.

<< R position or B position >>

case 1: (HV,DN) = (1,1): high similarity in the vertical and 45° diagonal directions;

case 2: (HV,DN) = (1,0): high similarity in the vertical direction;
case 3: (HV,DN) = (1,-1): high similarity in the vertical and 135° diagonal directions;
case 4: (HV,DN) = (0,1): high similarity in the 45° diagonal direction;
case 5: unused;
case 6: (HV,DN) = (0,-1): high similarity in the 135° diagonal direction;
case 7: (HV,DN) = (-1,1): high similarity in the horizontal and 45° diagonal directions;
case 8: (HV,DN) = (-1,0): high similarity in the horizontal direction; and
case 9: (HV,DN) = (-1,-1): high similarity in the horizontal and 135° diagonal directions.

<< G position >>

case 10: (HV,DN) = (1,x): high similarity at least in the vertical direction;
case 11_1: (HV,DN) = (0,1): high similarity in the 45° diagonal direction;
case 11_2: (HV,DN) = (0,-1): high similarity in the 135° diagonal direction; and
case 12: (HV,DN) = (-1 ,x): high similarity at least in the horizontal direction.

In accordance with this classification of cases 1 to 12, the image processing unit 11 selects the following coefficient tables from among the group of coefficient tables for low edge enhancement (the coefficient tables 5, 7, 9, 11, 13, 15, 17, 19, 21, 23, 25, and 27 shown in Figs. 9 to 13).

In case 1: select the coefficient table 5;
In case 2: select the coefficient table 7;
In case 3: select the coefficient table 9;
In case 4: select the coefficient table 11;
In case 5: unused;
In case 6: select the coefficient table 13;
In case 7: select the coefficient table 15;
In case 8: select the coefficient table 17;
In case 9: select the coefficient table 19;
In case 10: select the coefficient table 21;
In case 11_1: select the coefficient table 23;
In case 11_2: select the coefficient table 25; and
In case 12: select the coefficient table 27.

The coefficient tables selected here contain coefficients that are arranged with priority given to the directions of relatively high similarities.

After a coefficient table is selected thus, the image processing unit 11 moves the operation to step S51.

Step S50: Here, since condition 8 holds, the pixel to be processed is estimated to be an edge area of an image. The image processing unit 11 then selects a coefficient table from among a group of coefficient tables for high edge enhancement (coefficient tables 6, 8, 10, 12, 14, 16, 18, 20, 22, 24, 26, and 28 having a matrix size of 5 x 5, shown in Figs. 9 to 13).

Specifically, the image processing unit 11 classifies the pixel to be processed among cases 1 to 12 as in step S49.

In accordance with this classification of cases 1 to 12, the image processing unit 11 selects the following coefficient tables from among the group of coefficient tables for high edge enhancement (the coefficient tables 6, 8, 10, 12, 14, 16, 18, 20, 22, 24, 26, and 28 shown in Figs. 9 to 13).

In case 1: select the coefficient table 6;
In case 2: select the coefficient table 8;
In case 3: select the coefficient table 10;
In case 4: select the coefficient table 12;
In case 5: unused;
In case 6: select the coefficient table 14;
In case 7: select the coefficient table 16;
In case 8: select the coefficient table 1 8;
In case 9: select the coefficient table 20;
In case 10: select the coefficient table 22;

In case 11_1: select the coefficient table 24;
In case 11_2: select the coefficient table 26; and
In case 12: select the coefficient table 28.

The coefficient tables selected here contain coefficients that are arranged with priority given to the directions of relatively high similarities. In addition, these coefficient tables contain negative coefficient terms which are arranged in directions generally perpendicular to the directions of similarities, thereby allowing edge enhancement on the image.

After a coefficient table is selected thus, the image processing unit 11 moves the operation to step S51.

Step S51: By the series of operations described above, coefficient tables are selected pixel by pixel. The image processing unit 11 adds the color components in the local area including the pixel to be processed of the RAW data, by multiplying the coefficient values of the coefficient table selected thus.

Here, whichever coefficient tables shown in Figs. 9 to 13 are selected, the weighting ratios of the respective color components in this weighted addition shall always be kept as R : G : B = 1 : 2 : 1. These weighting ratios are equal to weighting ratios for determining a luminance component Y from RGB color components. In the foregoing weighted addition, the luminance component Y is thus generated directly from the RAW data pixel by pixel.

[Effects and others of First Embodiment]

As has been described, according to the first embodiment, the groups of coefficient tables having different spatial frequency characteristics are prepared in advance, and the groups of coefficient tables are switched for use in accordance with the analysis of the image structure (steps S43 and S48). As a result, the basically-separated image processes of color system conversion and spatial filtering in consideration of the image structure can be performed by a single weighted addition.

This eliminates the need to perform the spatial filtering and the color system conversion separately, thereby allowing a significant reduction in time necessary for processing the RAW data.

Besides, since what is necessary is a single weighted addition, it is also possible to reduce deterioration of image information as compared to the background art where color system conversion and spatial filtering are conducted step by step.

Moreover, according to the first embodiment, a type of coefficient tables having a higher level of noise removal will be selected when it is judged that similarities in a plurality of directions are isotropic and the similarities are high (steps S43 and S45). It is therefore possible to suppress noise noticeable in flat areas of the image strongly, while performing color system conversion.

On the other hand, according to the first embodiment, coefficient tables having low LPF characteristics will be selected for locations that have significant relief information (steps S43 and S44). It is therefore possible to generate high-quality image data that contains much image information.

Furthermore, according to the first embodiment, if the similarities among a plurality of directions are judged as having a large difference in magnitude, coefficient tables can be switched to a type of those having a higher level of edge enhancement for enhancing the high frequency components in the direction of non-similarity (steps S48 and S50). It is therefore possible to make images sharp in edge contrast, while performing color system conversion.

In addition, according to the first embodiment, the coefficient tables can be changed to ones having a higher level of noise removal as the imaging sensitivity increases (steps S42 and S46). This makes it possible to more strongly suppress noise which increases as the imaging sensitivity increases, while performing color system conversion.

Now, description will be given of another embodiment.

*** Second Embodiment ***

The electronic camera (including an image processing apparatus) according to a second embodiment performs color interpolation on RGB Bayer-array RAW data (corresponding to the first image), thereby generating image data that has RGB signal components arranged entirely on each pixel (corresponding to the second image).

The configuration of the electronic camera (Fig. 1) is the same as in the first embodiment. Description thereof will thus be omitted.

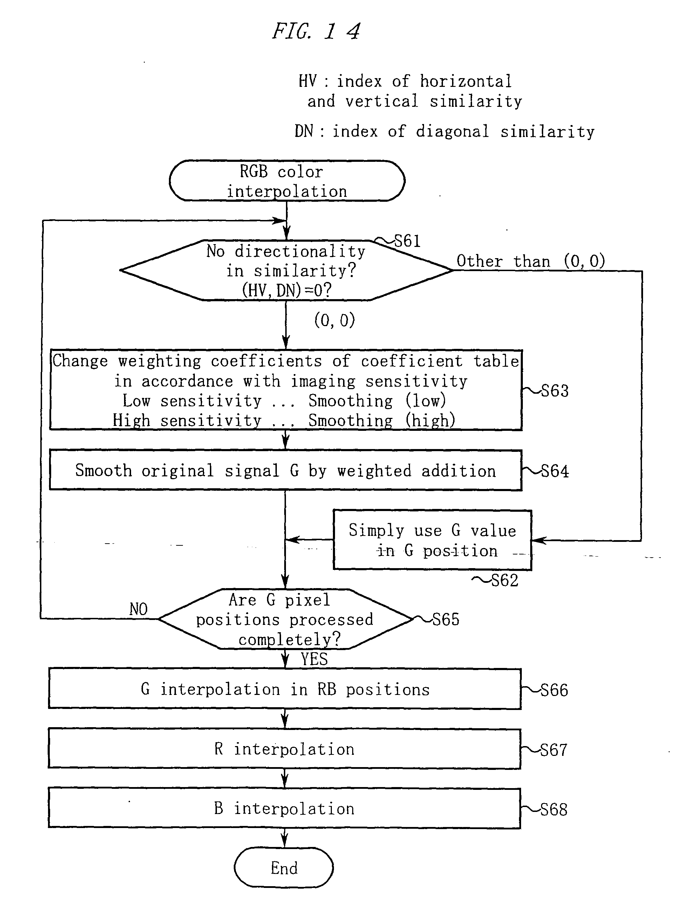

Fig. 14 is a flowchart for explaining the color interpolation according to the second embodiment. Hereinafter, the operation of the second embodiment will be described along the step numbers shown in Fig. 14.

Step S61: The image processing unit 1 makes a similarity judgment on a G pixel [i,j] of RAW data to be processed, thereby determining whether or not the location has similarities indistinguishable in any direction, i.e., whether or not the location has high isotropy, having no significant directionality in its image structure.

For example, the image processing unit 11 determines the indices (HV,DN) of this G pixel [i,j]. Since this processing is the same as in the first embodiment (Figs. 3 and 4), description thereof will be omitted.

Next, the image processing unit 11 judges whether or not the determined indices (HV,DN) are (0,0). If the indices (HV,DN) are (0,0), it is possible to judge that the similarities are generally uniform both in the vertical and horizontal directions and in the diagonal directions, and the G pixel [i,j] is a location having indistinguishable similarities. In this case, the image processing unit 11 moves the operation to step S63.

On the other hand, if the indices (HV,DN) are other than (0,0), the image structure has a significant directionality. In this case, the image processing unit 11 moves the operation to step S62.

Step S62: In this step, the image structure has a significant directionality. That is, it is highly possible that the G pixel [i, j] to be processed falls on an edge area, detailed area, or the like of an image and is an important image structure. Then, in order to maintain the important image structure with high fidelity, the image processing unit 1 skips smoothing processing (steps S63 and S64) to be described later. That is, the image processing unit 11 uses the value of the G pixel [i,j] in the RAW data simply as the G color component of the pixel [i,j] on a color interpolated plane.

After this processing, the image processing unit 11 moves the operation to step S65.

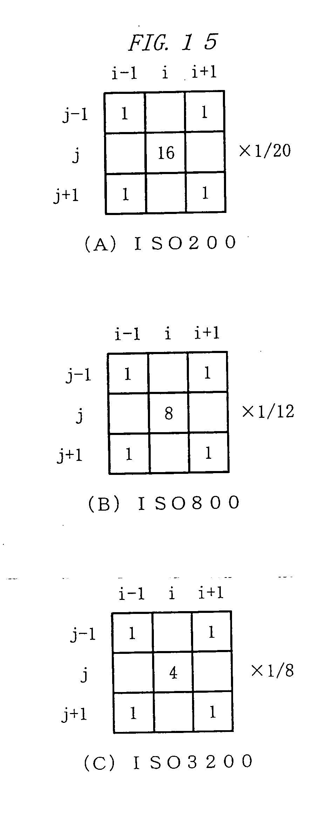

Step S63: In this step, in contrast, the image structure has no significant directionality. It is thus likely to be a flat area in the image or spot-like noise isolated from the periphery. The image processing unit 11 can perform smoothing on such locations alone, whereby noise in G pixels is suppressed without deteriorating important image structures. The image processing unit 11 determines the smoothing level by referring to the imaging sensitivity in capturing the RAW data, aside from the foregoing similarity judgment (judgment on image structures). Fig. 15 shows coefficient tables that are prepared in advance for changing the smoothing level. These coefficient tables define weighting coefficients to be used when adding the central G pixel [i,j] to be processed and the surrounding G pixels with weights.

Hereinafter, description will be given of the selection of the coefficient tables shown in Fig. 15.

Initially, if the imaging sensitivity is ISO 200, the image processing unit 11 selects the coefficient table shown in Fig. 15(A). This coefficient table is one having a low level of smoothing, in which the weighting ratio of the central G pixel to the surrounding G pixels is 4 : 1.

If the imaging sensitivity is ISO 800, the image processing unit 11 selects the coefficient table shown in Fig. 15(B). This coefficient table is one having a medium level of smoothing, in which the weighting ratio of the central G pixel to the surrounding G pixels is 2 : 1.

If the imaging sensitivity is ISO 3200, the image processing unit 11 selects the coefficient table shown in Fig. 15(C). This coefficient table is one having a high level of smoothing, in which the weighting ratio of the central G pixel to the surrounding G pixels is 1 : 1.

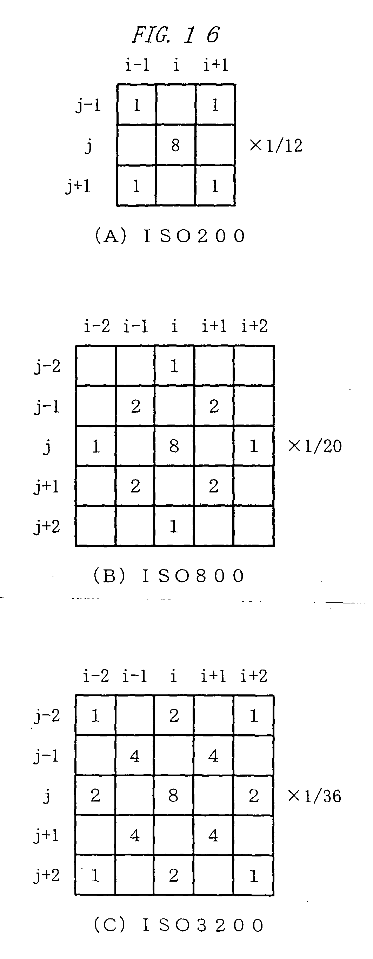

The coefficient tables shown in Fig. 16 may be used to change the smoothing level. Hereinafter, description will be given of the case of using the coefficient tables shown in Fig. 16.

Initially, if the imaging sensitivity is ISO 200, the coefficient table shown in Fig. 16(A) is selected. This coefficient table has a size of a $3 \times 3$ matrix of pixels, by which smoothing is performed on spatial relief of pixel values below this range. This can provide smoothing processing for this minute size of relief (spatial high-frequency components), with a relatively low level of smoothing.

If the imaging sensitivity is ISO 800, the coefficient table shown in Fig. 16(B) is selected. In this coefficient table, weighting coefficients are arranged in a rhombus configuration within the range of a 5 x 5 matrix of pixels. The resultant is a rhombus table equivalent to diagonal 4.24 x 4.24 pixels, in terms of horizontal and vertical pixel spacings. Consequently, relief below this range (spatial mid- and high-frequency components) is subjected to the smoothing, with a somewhat higher level of smoothing.

If the imaging sensitivity is ISO 3200, the coefficient table shown in Fig. 16(C) is selected. This coefficient table has a size of a 5 x 5 matrix of pixels, by which smoothing is performed on spatial relief of pixel values below this range. As a result, relief below this range (spatial mid-frequency components) is subjected to the smoothing, with an even higher level of smoothing.

Subsequently, description will be given of typical rules for changing the weighting coefficients here.

Initially, the lower the imaging sensitivity is, i.e., the lower noise the RAW data has, the greater the image processing unit 11 makes the weighting coefficient of the central G pixel relatively and/or the smaller it makes the size of the coefficient table. Such a change of the coefficient table can soften the smoothing.

On the contrary, the higher the imaging sensitivity is, i.e., the higher noise the RAW data has, the smaller the image processing unit 11 makes the weighting coefficient of the central G pixel relatively and/or the greater it makes the size of the coefficient table. Such a change of the coefficient table can intensify the smoothing.

Step S64: The image processing unit 11 adds the values of the surrounding G pixels to that of the G pixel [i,j] to be processed with weights in accordance with the weighting coefficients on the coefficient table selected. The image processing unit 11 uses the value of the G pixel [i,j] after the weighted addition as the G color component of the pixel [i,j] on a color interpolated plane.

After this processing, the image processing unit 11 moves the operation to step S65.

Step S65: The image processing unit 11 repeats the foregoing adaptive smoothing processing (steps S61 to S64) on G pixels of the RAW data.

If the image processing unit 11 completes this adaptive smoothing process on all the G pixels of the RAW data, it moves the operation to step S66.

Step S66: Subsequently, the image processing unit 11 performs interpolation on the R and B positions of the RAW data (vacant positions on the lattice of G color components), thereby generating interpolated G color components. For example, interpolation in consideration of the indices (HV,DN) as described below is performed here. "Z" in the equations generically represents either of the color components R and B.

$$\text{If } (HV,DN) = (0,0),\ G[i,j] = (Gv + Gh) / 2;$$

$$\text{If } (HV,DN) = (0,1),\ G[i,j] = (Gv45 + Gh45) / 2;$$

$$\text{If } (HV,DN) = (0,-1),\ G[i,j] = (Gv135 + Gh135) / 2;$$

$$\text{If } (HV,DN) = (1,0),\ G[i,j] = Gv;$$

$$\text{If } (HV,DN) = (1,1),\ G[i,j] = Gv45;$$

$$\text{If } (HV,DN) = (1,-1),\ G[i,j] = Gv135;$$

$$\text{If } (HV,DN) = (-1,0),\ G[i,j] = Gh;$$

$$\text{If } (HV,DN) = (-1,1),\ G[i,j] = Gh45;$$

and

$$\text{If } (HV,DN) = (-1,-1),\ G[i,j] = Gv135,$$

where:

$$Gv = (G[i,j-1] + G[i,j+1]) / 2$$

$$+ (2 \cdot Z[i,j] - Z[i,j-2] - Z[i,j+2]) / 8$$

$$+ (2 \cdot G[i-1,j] - G[i-1,j-2] - G[i-1,j+2]$$

$$+ 2 \cdot G[i+1,j] - G[i+1,j-2] - G[i+1,j+2]) / 16;$$

$$Gv45 = (G[i,j-1] + G[i,j+1]) / 2$$

$$+ (2 \cdot Z[i,j] - Z[i,j-2] - Z[i,j+2]) / 8$$

$$+ (2 \cdot Z[i-1,j+1] - Z[i-1,j-1] - Z[i-1,j+3]$$

$$+ 2 \cdot Z[i+1,j-1] - Z[i+1,j-3] - Z[i+1,j+1]) / 16;$$

$$Gv135 = (G[i,j-1] + G[i,j+1]) / 2$$

$$+ (2 \cdot Z[i,j] - Z[i,j-2] - Z[i,i+2]) / 8$$

$$+ (2 \cdot Z[i-1,j-1] - Z[i-1,j-3] - Z[i-1,j+1]$$

$$+ 2 \cdot z[i+1,j+1] - z[i+1,j-1] - Z[i+1,j+3]) / 16;$$

$$Gh = (G[i-1,j] + G[i+1,j]) / 2$$

$$+ (2 \cdot Z[i,j] - Z[i-2,j] - Z[i+2,j]) / 8$$

$$+ (2 \cdot G[i,j-1] - G[i-2,j-1] - G[i+2,j-1]$$

$$+ 2 \cdot G[i,j+1] - G[i-2,j+1] - G[i+2,j+1]) / 16;$$

$$Gh45 = (G[i-1,j] + G[i+1,j]) / 2$$

$$+ (2 \cdot z[i,j] - Z[i-2,j] - z[i+2,j]) / 8$$

$$+ (2 \cdot Z[i+1,j-1] - Z[i-1,i-1] - Z[i+3,j-1]$$

$$+ 2 \cdot Z[i-1,j+1] - Z[i-3,j+1] - Z[i+1,j+1]) / 16;$$

and

$$Gh135 = (G[i-1,j] + G[i+1,j]) / 2$$

$$+ (2 \cdot Z[i,j] - Z[i-2,j] - Z[i+2,j]) / 8$$

$$+ (2 \cdot Z[i-1,j-1] - Z[i-3,j-1] - Z[i+1,j-1]$$

$$+ 2 \cdot Z[i+1,j+1] - Z[i-1,j+1] - Z[i+3,j+1]) / 16.$$

Step S67: Subsequently, the image processing unit 11 performs interpolation on R color components. For example, pixels [i+1 ,j], [i,j+1], and [i+ 1,j+1] other than in R positions [i,j] are subjected to respective interpolations as follows:

$$R[i+1,j] = (R[i,j] + R[i+2,j]) / 2 + (2 \cdot G[i+1,j] - G[i,j] - G[i+2,j]) / 2;$$

$$R[i,j+1] = (R[i,j] + R[i,j+2]) / 2 + (2 \cdot G[i,j+1] - G[i,j] - G[i,j+2]) / 2;$$

and

$$R[i+1,j+1] = (R[i,j] + R[i+2,j] + R[i,j+2] + R[i+2,j+2]) / 4$$

$$+ (4 \cdot G[i+1,j+1] - G[i,j] - G[i+2,j] - G[i,j+2] - G[i+2,j+2]) / 4.$$

Step S68: Subsequently, the image processing unit 11 performs interpolation on B color components. For example, pixels [i+1,j], [i,j+1], and [i+1,j+1] other than in B positions [i,j] are subjected to respective interpolation processes as follows:

$$B[i+1,j] = (B[i,j] + B[i+2,j]) / 2 + (2 \cdot G[i+1,j] - G[i,j] - G[i+2,j]) / 2;$$

$$B[i,j+1] = (B[i,j] + B[i,j+2]) / 2 + (2 \cdot G[i,j+1] - G[i,j] - G[i,j+2]) / 2;$$

and

$$B[i+1,j+1] = (B[i,j] + B[i+2,j] + B[i,j+2] + B[i+2,j+2]) / 4$$

$$+ (4 \cdot G[i+1,j+1] - G[i,j] - G[i+2,j] - G[i,j+2] - G[i+2,j+2]) / 4.$$

By the series of processes described above, RGB color interpolation is completed.

*** Third Embodiment ***

The electronic camera (including an image processing apparatus) according to a third embodiment performs color interpolation on RGB Bayer-array RAW data (corresponding to the first image), thereby generating image data that has RGB signal components arranged on each pixel (corresponding to the second image).
The configuration of the electronic camera (Fig. 1) is the same as in the first embodiment. Description thereof will thus be omitted.

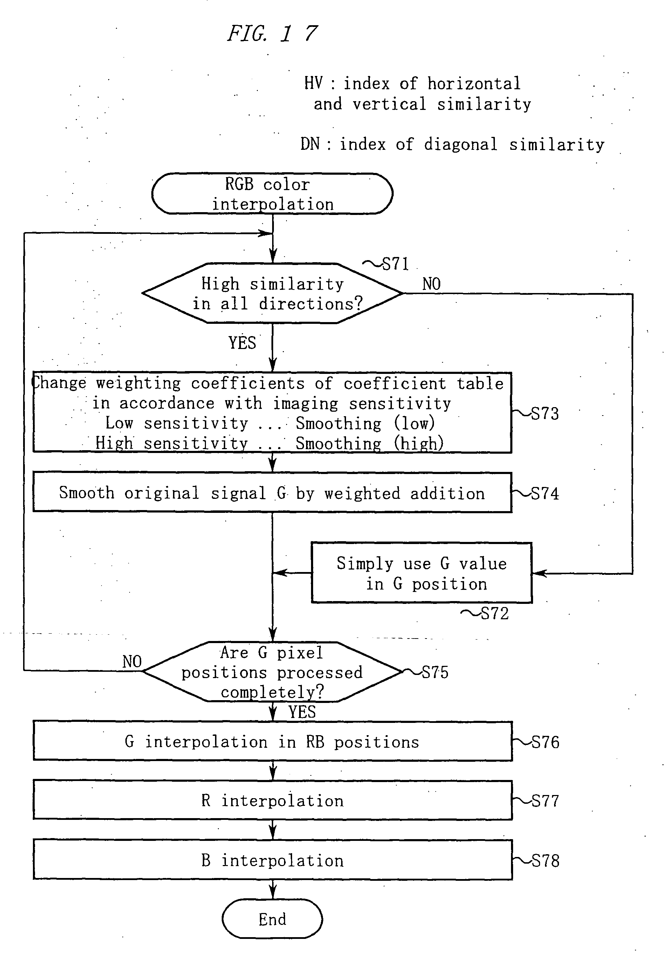

Fig. 17 is a flowchart for explaining color interpolation according to the third embodiment. Hereinafter, the operation of the third embodiment will be described along the step numbers shown in Fig. 17. Step S71: The image processing unit 11 makes a similarity- judgment on a G pixel [i,j] of RAW data to be processed, thereby determining whether or not the similarities in all the directions are higher than predetermined levels, i.e., whether or not the location has a high flatness without any significant directionality in its image structure.
For example, the image processing unit 11 determines the similarity degrees Cv, Ch, C45, and C135 of this G pixel [i,j]. Since this processing is the same as in the first embodiment, description thereof will be omitted.
Next, the image processing unit 11 judges if all the similarity degrees Cv, Ch, C45, and C135 determined are lower than or equal to predetermined thresholds, based on the following conditional expression:
$(Cv \leq Thv)$ AND $(Ch \leq Thh)$ AND $(C45 \leq Th45)$ AND $(C135 \leq Th135)$.

The thresholds in the expression are values for judging if the similarity degrees show significant changes in pixel value. It is thus preferable that the higher the imaging sensitivity is, the higher the thresholds are made in consideration of increasing noise.

If this conditional expression is satisfied, the location is judged as being flat in the horizontal, vertical, and diagonal directions. In this case, the image processing unit 11 moves the operation to step S73.

On the other hand, if this conditional expression is not satisfied, the image structure has a significant directionality. In this case, the image processing unit 11 moves the operation to step S72.

Steps S72 to S78: The same as steps S62 to S68 of the second embodiment. Description thereof will thus be omitted.

By the series of processes described above, RGB color interpolation is completed.

*** Supplemental Remarks on Embodiments ***

At step S43 of the foregoing first embodiment, if it is judged that the similarities in a plurality of directions are isotropic and the similarities are low, then a type of coefficient tables having a higher level of noise removal may be selected. In this case, it is possible to consider locations of low similarity as being noise and remove them powerfully, while performing color system conversion. In such an operation, relief information on isotropic locations (locations that are obviously non-edges) can be removed powerfully as isolated noise points. That is, it becomes possible to remove grains of noise, mosaics of color noise, and the like appropriately without losing the image structures of the edge areas.

Moreover, at step S48 of the foregoing first embodiment, if it is judged that the difference in the magnitude of similarity between directions is small, coefficient tables of detail enhancement type for enhancing high frequency components of signal components may be selected. In this case, it is possible to enhance fine image structures that no directionality, while performing color system conversion.

In one of the foregoing embodiments, description has been given of the color system conversion into a luminance component. However, the present invention is not limited thereto. For example, the present invention may be applied to color system conversion into chrominance components. In this case, it becomes possible to perform spatial filtering (LPF processing in particular) in consideration of image structures, simultaneously with the generation of chrominance components. The occurrence of color artifacts ascribable to chrominance noise can thus be suppressed favorably.

Moreover, in one of the foregoing embodiments, description has been given of the case where the present invention is applied to color system conversion. However, the present invention is not limited thereto. For example, the coefficient tables for color system conversion may be replaced with coefficient tables for color interpolation, so that color interpolation and sophisticated spatial filtering in consideration of image structures can be performed at the same time.

More specifically, while the second embodiment has only dealt with the case of performing color interpolation and low-pass processing simultaneously, edge enhancement processing may also be included as in the first embodiment.

Moreover, the foregoing embodiments have dealt with the cases where the present invention is applied to the electronic camera 1. However, the present invention is not limited thereto. For example, an image processing program may be used to make the external computer 18 execute the operations shown in Figs. 2 to 7.

Moreover, image processing services according to the present invention may be provided over communication lines such as the Internet.

Furthermore, the image processing function of the present invention may be added to electronic cameras afterwards by rewriting the firmware of the electronic cameras.

The invention may be embodied in other specific forms without departing from the spirit and essential characteristics thereof. The foregoing embodiments are therefore to be considered in all aspects as illustrative and not restrictive. The scope of the invention is indicated by the appended claims rather than by the foregoing description. All changes which come within the meaning and range of equivalency of the claims are therefore intended to be embraced therein.

*INDUSTRIAL APPLICABILITY*

As has been described above, the present invention is applicable to image processing apparatuses and the like.

**Claims**

1. An image processing apparatus for converting a first image into a second image, the first image being composed of any one of first to nth color components ($n \geq 2$) arranged on each pixel, the second image composed of all of the first to nth color components arranged entirely on each pixel, the apparatus comprising:

   a smoothing unit that performs smoothing for a pixel position of the first color component in the first image, using the first color component of pixels adjacent to the pixel position, to output the first color component having been smoothed as the first color component in the pixel position of the second image, wherein said smoothing unit includes a control unit that changes a characteristic of a smoothing filter in accordance with an imaging sensitivity at which said first image is captured.

2. The image processing apparatus according to claim 1, wherein among the first to nth color components, said first color component is a color component that carries a luminance signal.

3. The image processing apparatus according to claim 2, wherein the first to nth color components are red, green, and blue, and the first color component is green.

4. The image processing apparatus according to claim 1, wherein said control unit changes a size (a range of pixels to be referred) of said filter in accordance with the imaging sensitivity.

5. The image processing apparatus according to claim 1, wherein said control unit changes coefficient values (contribution ratios of pixel components to be referred among pixels around a smoothing target pixel) of said filter in accordance with the imaging sensitivity.

6. The image processing apparatus according to claim 1, wherein said smoothing unit includes:

   a similarity judgment unit that judges a magnitude of similarity among pixels in a plurality of directions; and
   a switching unit switchingly outputs, based on a result of the judgment, the first color component of the first image and the first color component having been smoothed as the first color component of the second image.

7. The image processing apparatus according to claim 6, wherein said similarity judgment unit judge's similarity by calculating similarity degrees among pixels at least in four directions.

8. An image processing apparatus for converting a first image into a second image, the first image being composed of any one of first to nth color components (n ≥ 2) arranged on each pixel, the second image composed of at least one signal component arranged entirely on each pixel, the apparatus comprising:

   a signal generating unit that generates a signal component of said second image by performing weighted addition of color components in the first image, wherein
   said signal generating unit includes a control unit that changes weighting coefficients for the weighted addition in accordance with an imaging sensitivity at which said first image is captured, the weighting coefficients being used for adding up the color components in said first image.

9. The image processing apparatus according to claim 8, wherein said signal generating unit generates a signal component different from said first to nth color components.

10. The image processing apparatus according to claim 9, wherein said signal generating unit generates a luminance component different from said first to nth color components.

11. The image processing apparatus according to claim 8, wherein said control unit changes said weighting coefficients for a pixel position of the first color component in the first image in accordance with said imaging sensitivity.

12. The image processing apparatus according to claim 8, wherein said control unit changes a range of said weighted addition in accordance with said imaging sensitivity.

13. The image processing apparatus according to claim 8, wherein said control unit changes said weighting coefficients within the identical range in accordance with said imaging sensitivity.

14. The image processing apparatus according to claim 8, wherein:

   said signal generating unit has a similarity judgment unit that judges a magnitude of similarity among pixels in a plurality of directions; and

said control unit changes said weighting coefficients in accordance with a result of the judgment in addition to said imaging sensitivity.

15. The image processing apparatus according to claim 14, wherein
said control unit executes weighted addition of a color component originally existing on a pixel to be processed in the first image and the same color component existing on the surrounding pixels, when the result of the judgment indicates no distinctive similarity in any direction or higher similarity than a predetermined level in all of the directions.

16. The image processing apparatus according to claim 14, wherein
said similarity judgment unit judge's similarity by calculating similarity degrees among pixels at least in four directions.

17. An image processing apparatus for converting a first image composed of a plurality of kinds of color components mixedly arranged on a pixel array, to generate a second image composed of at least one kind of signal component (hereinafter, new component) arranged entirely on each pixel, the color components constituting a color system, the apparatus comprising:

a similarity judgment unit that judges similarity of a pixel to be processed along a plurality of directions in said first image;
a coefficient selecting unit that selects a predetermined coefficient table in accordance with a result of the judgment on said similarity having been made in said similarity judgment unit; and
a conversion processing unit that performs weighted addition of said color components in a local area including the pixel to be processed according to the coefficient table having been selected, thereby generating said new component, wherein
said coefficient selecting unit selects a different coefficient table having a different spatial frequency characteristic in accordance with an analysis of an image structure based on said similarity, to adjust a spatial frequency component of said new component.

18. The image processing apparatus according to claim 17, wherein
said coefficient selecting unit analyzes an image structure of pixels near the pixel to be processed, based on a result of the judgment on a magnitude of said similarity, and selects a different coefficient table having a different spatial frequency characteristic in accordance with the analysis.

19. The image processing apparatus according to claim 17 or 18, wherein
when selecting the different coefficient table having a different spatial frequency characteristic, said coefficient selecting unit selects a coefficient table having a different array size.

20. The image processing apparatus according to any one of claims 17 to 19, wherein
when said similarity is judged to be substantially uniform in the plurality of directions according to the result of the judgment and judged to be high from said analysis of an image structure, said coefficient selecting unit selects a different coefficient table for a higher level of noise removal to suppress a high frequency component of said signal component greatly and/or over a wide bandlength.

21. The image processing apparatus according to any one of claims 17 to 19, wherein
when said similarity is judged to be substantially uniform in the plurality of directions according to the result of the judgment and judged to be low from said analysis of an image structure, said coefficient selecting unit selects a different coefficient table for a higher level of noise removal to suppress a high frequency component of said signal component greatly and/or over a wide bandlength.

22. The image processing apparatus according to any one of claims 17 to 19, wherein
when a difference in the magnitude of said similarity in the directions is judged to be large from said analysis of an image structure, said coefficient selecting unit selects a different coefficient table for a higher level of edge enhancement to enhance a high frequency component in a direction of low similarity.

23. The image processing apparatus according to any one of claims 17 to 19, wherein:

when a difference in the magnitude of said similarity in the directions is judged to be small from said analysis of an image structure, said coefficient selecting unit selects a different coefficient table for a higher level of detail enhancement to enhance a high frequency component of said signal component.

**24.** The image processing apparatus according to any one of claims 17 to 23, wherein:

said coefficient selecting unit selects the coefficient table for a higher level of noise removal such that the higher the imaging sensitivity at which said first image is captured is, the higher the level of noise removal through the selected coefficient table is.

**25.** The image processing apparatus according to any one of claims 17 to 24, wherein:

weighting ratios between said color components are maintained to be substantially constant before and after selecting the different coefficient table.

**26.** The image processing apparatus according to any one of claims 17 to 25, wherein:

the weighting ratios between said color components are intended for color system conversion.

**27.** An image processing apparatus comprising:

a smoothing unit that smoothes image data by performing weighted addition on a pixel to be processed and the surrounding pixels in the image data; and
a control unit that changes a referential range of the surrounding pixels in accordance with an imaging sensitivity at which said image data is captured.

**28.** An image processing program that enables a computer to operate as an image processing apparatus according to any one of claims 1 to 27.

**29.** An electronic camera comprising:

an image processing apparatus according to any one of claims 1 to 27; and
an image sensing unit capturing a subject to generate the first image, wherein
said image processing apparatus processes the first image to generate the second image.

**30.** An image processing method for converting a first image into a second image, the first image being composed of any one of first to nth color components ($n \geq 2$) arranged on each pixel, the second image composed of at least one signal component arranged entirely on each pixel, the method comprising the step of
generating the signal component of said second image by performing weighted addition of color components in said first image, wherein
the generating step includes a step of changing weighting coefficients for the weighted addition in accordance with an imaging sensitivity at which said first image is captured, the weighting coefficients being used for adding up the color components in said first image.

**31.** An image processing method for converting a first image composed of a plurality of kinds of color components mixedly arranged on a pixel array, to generate a second image composed of at least one kind of signal component (hereinafter, new component) arranged entirely on each pixel, the color components constituting a color system, the method comprising the steps of:

judging similarity of a pixel to be processed along a plurality of directions in said first image;
selecting a predetermined coefficient table in accordance with a result of the judgment on the similarity in the judging step; and
performing weighted addition of said color components in a local area including the pixel to be processed according to the coefficient table having been selected, thereby generating the new component, wherein
in the coefficient table selecting step, a spatial frequency component of said new component is adjusted by selecting a different coefficient table having a different spatial frequency characteristic in accordance with an analysis of an image structure based on said similarity.

FIG. 1

*FIG. 2*

HV : index of horizontal
   and vertical similarity

DN : index of diagonal similarity

```
         ┌─────────────────────────┐
        ( Color system              )
        (  conversion processing    )
         └─────────────────────────┘
                     │
                     ▼
        ┌─────────────────────────┐
        │     Perform HV          │ ~ S 1
        │  setting processing     │
        └─────────────────────────┘
                     │
                     ▼
        ┌─────────────────────────┐
        │     Perform DN          │ ~ S 2
        │  setting processing     │
        └─────────────────────────┘
                     │
                     ▼
   ┌─────────────────────────────┐
   │ Perform luminance component │ ~ S 3
   │    generation processing    │
   └─────────────────────────────┘
                     │
              ┌──────────────────────────────────┐
              │  Perform chromaticity compo-     │ ~ S 4
              │  nent generation processing      │
              └──────────────────────────────────┘
                     │
                     ▼
              ┌──────────┐
             (   END      )
              └──────────┘
```

*FIG. 3*

```
            ┌─────────────────────┐
            │     HV setting      │
            │     processing      │
            └──────────┬──────────┘
                       ↓
   ┌───────────────────────────────────────┐
   │  Determine similarity degrees in      │  ～ S 1 2
   │  horizontal and vertical directions   │
   └───────────────────┬───────────────────┘
                       ↓
                              S 1 3
 High horizontal      ╱─────────────╲      High vertical
   similarity        ╱   Compare     ╲      similarity
   ┌─────────────── │ horizontal and  │ ───────────────┐
   │                 ╲ vertical        ╱                │
   │                  ╲similarity     ╱                 │
   │                   ╲  degrees   ╱                   │
   │              S 1 4  ╲─────────╱  Nearly equal      │
   │                          ↓                         │
   │            ┌─────────────────────┐                 │
   │            │    Set HV to 0      │                 │
   │            └──────────┬──────────┘                 │
   │                       │                            │
 S 1 6                     │                         S 1 5
   ↓                       │                            ↓
┌──────────────┐           │              ┌──────────────┐
│ Set HV to -1 │           │              │  Set HV to 1 │
└──────┬───────┘           │              └──────┬───────┘
       │                   ↓                     │
       └──────────────→ ┌──────┐ ←───────────────┘
                        │ End  │
                        └──────┘
```

*FIG. 4*

*FIG. 5*

HV : index of horizontal
and vertical similarity
DN : index of diagonal similarity

```
        ( luminance component
          generation processing )
                    │
                    ▼
            Judge                      Other than (0,0)
        direction of similarity ────────────────────────▶ ( 1 )
            (HV, DN) ?
            (0,0) │         ~S41
                  ▼
            How is imaging         High sensitivity
            sensitivity ?   ~S42
            Low          │
        sensitivity      ▼
  Yes(Low)      Judge magnitude
        ◀────── of similarity Similarity degrees ──▶ ~S43
                > threshold th6
  ~S44  │                 NO(High)              ~S46
        ▼                                          │
┌──────────────────────┐   ┌──────────────────────────┐   ( 2 )
│ Select coefficient   │   │ Select coefficient table 4│
│ table 1              │   │ for RGB positions         │
│ for RGB positions    │   │ in common(even higher LPF)│
│ in common(low LPF)   │   └──────────────────────────┘
└──────────────────────┘
        │      ┌──────────────────────────────┐
        │      │ Select coefficient table 2 for RB │
        │      │ positions, select coefficient table 3│
        │      │ for G position(high LPF)      │
        │      └──────────────────────────────┘
        │                              ~S45
        ▼              ▼                 │          │
┌──────────────────────────────────────────────────────┐
│ Calculate luminance component Y by weighted addition  │
└──────────────────────────────────────────────────────┘
                        │                          ~S51
                        ▼
                    ( END )
```

① *FIG. 6*

Determine difference in magnitude between similarity in direction of similarity and similarity in direction of non-similarity ～S47

Any edge?
|Difference in magnitude|
> threshold th7 — YES → ③
～S48
NO ↓

Judge (HV, DN) and color component pixel by pixel ～S49

| | | |
|---|---|---|
| case1 | (HV, DN) = (1, 1) / R Position · B Position | Select coefficient table 5 |
| case2 | (HV, DN) = (1, 0) / R Position · B Position | Select coefficient table 7 |
| case3 | (HV, DN) = (1, -1) / R Position · B Position | Select coefficient table 9 |
| case4 | (HV, DN) = (0, 1) / R Position · B Position | Select coefficient table 11 |
| case6 | (HV, DN) = (0, -1) / R Position · B Position | Select coefficient table 13 |
| case7 | (HV, DN) = (-1, 1) / R Position · B Position | Select coefficient table 15 |
| case8 | (HV, DN) = (-1, 0) / R Position · B Position | Select coefficient table 17 |
| case9 | (HV, DN) = (-1, -1) / R Position · B Position | Select coefficient table 19 |
| case10 | (HV, DN) = (1, x) / G Position | Select coefficient table 21 |
| case11_1 | (HV, DN) = (0, 1) / G Position | Select coefficient table 23 |
| case11_2 | (HV, DN) = (0, -1) / G Position | Select coefficient table 25 |
| case12 | (HV, DN) = (-1, x) / G Position | Select coefficient table 27 |

②

*FIG. 7*

③

Judge (HV, DN)
and color component
pixel by pixel ⟩ S 50

case1 | $(HV, DN) = (1, 1)$ | → | Select
| R Position · B Position | | coefficient table 6

case2 | $(HV, DN) = (1, 0)$ | → | Select
| R Position · B Position | | coefficient table 8

case3 | $(HV, DN) = (1, -1)$ | → | Select
| R Position · B Position | | coefficient table 10

case4 | $(HV, DN) = (0, 1)$ | → | Select
| R Position · B Position | | coefficient table 12

case6 | $(HV, DN) = (0, -1)$ | → | Select
| R Position · B Position | | coefficient table 14

case7 | $(HV, DN) = (-1, 1)$ | → | Select
| R Position · B Position | | coefficient table 16

case8 | $(HV, DN) = (-1, 0)$ | → | Select
| R Position · B Position | | coefficient table 18

case9 | $(HV, DN) = (-1, -1)$ | → | Select
| R Position · B Position | | coefficient table 20

case10 | $(HV, DN) = (1, x)$ | → | Select
| G Position | | coefficient table 22

case11_1 | $(HV, DN) = (0, 1)$ | → | Select
| G Position | | coefficient table 24

case11_2 | $(HV, DN) = (0, -1)$ | → | Select
| G Position | | coefficient table 26

case12 | $(HV, DN) = (-1, x)$ | → | Select
| G Position | | coefficient table 28

②

*FIG. 8*

Vertical
direction

135° diagonal    (1, −1)  (1, 0)   (1, 1)    45° diagonal
direction                                 direction
(0, −1)               (0, 1)

(−1, 1)

(0, 0)             (−1, 0)   Horizontal
direction

(−1, −1)

## FIG. 9

AN EXAMPLE OF SETTINGS IN COEFFICIENT TABLES(1)

|       | i-1 | i   | i+1 |
|-------|-----|-----|-----|
| j-1   | 1   | 2   | 1   |
| j     | 2   | 4   | 2   |
| j+1   | 1   | 2   | 1   |

×1/16

(1) COEFFICIENT TABLE 1

|      | i-2 | i-1 | i   | i+1 | i+2 |
|------|-----|-----|-----|-----|-----|
| j-2  | 0   | 0   | 1   | 0   | 0   |
| j-1  | 0   | 2   | 4   | 2   | 0   |
| j    | 1   | 4   | 4   | 4   | 1   |
| j+1  | 0   | 2   | 4   | 2   | 0   |
| j+2  | 0   | 0   | 1   | 0   | 0   |

×1/32

(2) COEFFICIENT TABLE 2

|      | i-2 | i-1 | i   | i+1 | i+2 |
|------|-----|-----|-----|-----|-----|
| j-2  | 0   | 1   | 0   | 1   | 0   |
| j-1  | 1   | 2   | 2   | 2   | 1   |
| j    | 0   | 2   | 8   | 2   | 0   |
| j+1  | 1   | 2   | 2   | 2   | 1   |
| j+2  | 0   | 1   | 0   | 1   | 0   |

×1/32

(3) COEFFICIENT TABLE 3

|      | i-2 | i-1 | i   | i+1 | i+2 |
|------|-----|-----|-----|-----|-----|
| j-2  | 0   | 1   | 1   | 1   | 0   |
| j-1  | 1   | 2   | 2   | 2   | 1   |
| j    | 1   | 2   | 4   | 2   | 1   |
| j+1  | 1   | 2   | 2   | 2   | 1   |
| j+2  | 0   | 1   | 1   | 1   | 0   |

×1/32

(4) COEFFICIENT TABLE 4

|      | i-1 | i   | i+1 |
|------|-----|-----|-----|
| j-1  | 0   | 2   | 1   |
| j    | 0   | 2   | 0   |
| j+1  | 1   | 2   | 0   |

×1/8

(5) COEFFICIENT TABLE 5

|      | i-2 | i-1 | i   | i+1 | i+2 |
|------|-----|-----|-----|-----|-----|
| j-2  | 0   | −2  | −1  | 0   | 0   |
| j-1  | 0   | −2  | 6   | 3   | 0   |
| j    | −1  | −2  | 6   | −2  | −1  |
| j+1  | 0   | 3   | 6   | −2  | 0   |
| j+2  | 0   | 0   | −1  | −2  | 0   |

×1/8

(6) COEFFICIENT TABLE 6

## FIG. 10

AN EXAMPLE OF SETTINGS IN COEFFICIENT TABLES(2)

|       | i-1 | i  | i+1 |
|-------|-----|----|-----|
| j-1   | 1   | 4  | 1   |
| j     | 0   | 4  | 0   |
| j+1   | 1   | 4  | 1   |

×1/16

(7) COEFFICIENT TABLE 7

|       | i-2 | i-1 | i  | i+1 | i+2 |
|-------|-----|-----|----|-----|-----|
| j-2   | 0   | 0   | 0  | 0   | 0   |
| j-1   | -1  | 2   | 12 | 2   | -1  |
| j     | -1  | -2  | 10 | -2  | -1  |
| j+1   | -1  | 2   | 12 | 2   | -1  |
| j+2   | 0   | 0   | 0  | 0   | 0   |

×1/32

(8) COEFFICIENT TABLE 8

|       | i-1 | i  | i+1 |
|-------|-----|----|-----|
| j-1   | 1   | 2  | 0   |
| j     | 0   | 2  | 0   |
| j+1   | 0   | 2  | 1   |

×1/8

(9) COEFFICIENT TABLE 9

|       | i-2 | i-1 | i  | i+1 | i+2 |
|-------|-----|-----|----|-----|-----|
| j-2   | 0   | 0   | -1 | -2  | 0   |
| j-1   | 0   | 3   | 6  | -2  | 1   |
| j     | -1  | -2  | 6  | -2  | -1  |
| j+1   | 0   | -2  | 6  | 3   | 0   |
| j+2   | 0   | -2  | -1 | 0   | 0   |

×1/8

(10) COEFFICIENT TABLE 10

|       | i-1 | i  | i+1 |
|-------|-----|----|-----|
| j-1   | 0   | 1  | 1   |
| j     | 1   | 2  | 1   |
| j+1   | 1   | 1  | 0   |

×1/8

(11) COEFFICIENT TABLE 11

|       | i-2 | i-1 | i  | i+1 | i+2 |
|-------|-----|-----|----|-----|-----|
| j-2   | 0   | -1  | -1 | 0   | 0   |
| j-1   | -1  | -2  | 2  | 3   | 0   |
| j     | -1  | 2   | 6  | 2   | -1  |
| j+1   | 0   | 3   | 2  | -2  | -1  |
| j+2   | 0   | 0   | -1 | -1  | 0   |

×1/8

(12) COEFFICIENT TABLE 12

## FIG. 11

### AN EXAMPLE OF SETTINGS IN COEFFICIENT TABLES(3)

|       | i-1 | i | i+1 |
|-------|-----|---|-----|
| j-1   | 1   | 1 | 0   |
| j     | 1   | 2 | 1   |
| j+1   | 0   | 1 | 1   |

×1/8

(13) COEFFICIENT TABLE 13

|       | i-2 | i-1 | i | i+1 | i+2 |
|-------|-----|-----|---|-----|-----|
| j-2   | 0   | 0   | -1 | -1 | 0   |
| j-1   | 0   | 3   | 2  | -2 | -1  |
| j     | -1  | 2   | 6  | 2  | -1  |
| j+1   | -1  | -2  | 2  | 3  | 0   |
| j+2   | 0   | -1  | -1 | 0  | 0   |

×1/8

(14) COEFFICIENT TABLE 14

|       | i-1 | i | i+1 |
|-------|-----|---|-----|
| j-1   | 0   | 0 | 1   |
| j     | 2   | 2 | 2   |
| j+1   | 1   | 0 | 0   |

×1/8

(15) COEFFICIENT TABLE 15

|       | i-2 | i-1 | i | i+1 | i+2 |
|-------|-----|-----|---|-----|-----|
| j-2   | 0   | 0   | -1 | 0  | 0   |
| j-1   | -2  | -2  | -2 | 3  | 0   |
| j     | -1  | 6   | 6  | 6  | -1  |
| j+1   | 0   | 3   | -2 | -2 | -2  |
| j+2   | 0   | 0   | -1 | 0  | 0   |

×1/8

(16) COEFFICIENT TABLE 16

|       | i-1 | i | i+1 |
|-------|-----|---|-----|
| j-1   | 1   | 0 | 1   |
| j     | 4   | 4 | 4   |
| j+1   | 1   | 0 | 1   |

×1/16

(17) COEFFICIENT TABLE 17

|       | i-2 | i-1 | i  | i+1 | i+2 |
|-------|-----|-----|----|-----|-----|
| j-2   | 0   | -1  | -1 | -1  | 0   |
| j-1   | 0   | 2   | -2 | 2   | 0   |
| j     | 0   | 12  | 10 | 12  | 0   |
| j+1   | 0   | 2   | -2 | 2   | 0   |
| j+2   | 0   | -1  | -1 | -1  | 0   |

×1/32

(18) COEFFICIENT TABLE 18

## FIG. 12

### AN EXAMPLE OF SETTINGS IN COEFFICIENT TABLES(4)

|      | i-1 | i | i+1 |
|------|-----|---|-----|
| j-1  | 1   | 0 | 0   |
| j    | 2   | 2 | 2   | ×1/8
| j+1  | 0   | 0 | 1   |

(19) COEFFICIENT TABLE 19

|      | i-2 | i-1 | i  | i+1 | i+2 |
|------|-----|-----|----|-----|-----|
| j-2  | 0   | 0   | -1 | 0   | 0   |
| j-1  | 0   | 3   | -2 | -2  | -2  |
| j    | -1  | 6   | 6  | 6   | -1  | ×1/8
| j+1  | -2  | -2  | -2 | 3   | 0   |
| j+2  | 0   | 0   | -1 | 0   | 0   |

(20) COEFFICIENT TABLE 20

|      | i-1 | i | i+1 |
|------|-----|---|-----|
| j-1  | 0   | 1 | 0   |
| j    | 1   | 4 | 1   | ×1/8
| j+1  | 0   | 1 | 0   |

(21) COEFFICIENT TABLE 21

|      | i-2 | i-1 | i  | i+1 | i+2 |
|------|-----|-----|----|-----|-----|
| j-2  | 0   | 0   | 0  | 0   | 0   |
| j-1  | -1  | -1  | 4  | -1  | -1  |
| j    | -2  | 2   | 16 | 2   | -2  | ×1/16
| j+1  | -1  | -1  | 4  | -1  | -1  |
| j+2  | 0   | 0   | 0  | 0   | 0   |

(22) COEFFICIENT TABLE 22

|      | i-1 | i | i+1 |
|------|-----|---|-----|
| j-1  | 0   | 1 | 0   |
| j    | 1   | 4 | 1   | ×1/8
| j+1  | 0   | 1 | 0   |

(23) COEFFICIENT TABLE 23

|      | i-2 | i-1 | i  | i+1 | i+2 |
|------|-----|-----|----|-----|-----|
| j-2  | 0   | -1  | -1 | 0   | 0   |
| j-1  | -1  | -2  | 3  | 0   | 0   |
| j    | -1  | 3   | 16 | 3   | -1  | ×1/16
| j+1  | 0   | 0   | 3  | -2  | -1  |
| j+2  | 0   | 0   | -1 | -1  | 0   |

(24) COEFFICIENT TABLE 24

## FIG. 13
### AN EXAMPLE OF SETTINGS IN COEFFICIENT TABLES(5)

|       | i-1 | i | i+1 |
|-------|-----|---|-----|
| j-1   | 0   | 1 | 0   |
| j     | 1   | 4 | 1   |
| j+1   | 0   | 1 | 0   |

×1/8

(2 5) COEFFICIENT TABLE 2 5

|       | i-2 | i-1 | i  | i+1 | i+2 |
|-------|-----|-----|----|-----|-----|
| j-2   | 0   | 0   | −1 | −1  | 0   |
| j-1   | 0   | 0   | 3  | −2  | −1  |
| j     | −1  | 3   | 16 | 3   | −1  |
| j+1   | −1  | −2  | 3  | 0   | 0   |
| j+2   | 0   | −1  | −1 | 0   | 0   |

×1/16

(2 6) COEFFICIENT TABLE 2 6

|       | i-1 | i | i+1 |
|-------|-----|---|-----|
| j-1   | 0   | 1 | 0   |
| j     | 1   | 4 | 1   |
| j+1   | 0   | 1 | 0   |

×1/8

(2 7) COEFFICIENT TABLE 2 7

|       | i-2 | i-1 | i  | i+1 | i+2 |
|-------|-----|-----|----|-----|-----|
| j-2   | 0   | −1  | −2 | −1  | 0   |
| j-1   | 0   | −1  | 2  | −1  | 0   |
| j     | 0   | 4   | 16 | 4   | 0   |
| j+1   | 0   | −1  | 2  | −1  | 0   |
| j+2   | 0   | −1  | −2 | −1  | 0   |

×1/16

(2 8) COEFFICIENT TABLE 2 8

## FIG. 14

HV : index of horizontal
and vertical similarity

DN : index of diagonal similarity

RGB color interpolation

No directionality in similarity? (HV, DN)=0? ~S61

Other than (0, 0)

(0, 0)

Change weighting coefficients of coefficient table in accordance with imaging sensitivity
Low sensitivity ... Smoothing (low)
High sensitivity ... Smoothing (high) ~S63

Smooth original signal G by weighted addition ~S64

Simply use G value in G position ~S62

Are G pixel positions processed completely? ~S65

NO

YES

G interpolation in RB positions ~S66

R interpolation ~S67

B interpolation ~S68

End

34

## FIG. 15

|  | i-1 | i | i+1 |
|---|---|---|---|
| j-1 | 1 |  | 1 |
| j |  | 16 |  |
| j+1 | 1 |  | 1 |

×1/20

(A) ISO200

|  | i-1 | i | i+1 |
|---|---|---|---|
| j-1 | 1 |  | 1 |
| j |  | 8 |  |
| j+1 | 1 |  | 1 |

×1/12

(B) ISO800

|  | i-1 | i | i+1 |
|---|---|---|---|
| j-1 | 1 |  | 1 |
| j |  | 4 |  |
| j+1 | 1 |  | 1 |

×1/8

(C) ISO3200

## FIG. 16

|       | i-1 | i   | i+1 |
|-------|-----|-----|-----|
| j-1   | 1   |     | 1   |
| j     |     | 8   |     |
| j+1   | 1   |     | 1   |

$\times 1/12$

(A)  I S O 2 0 0

|       | i-2 | i-1 | i   | i+1 | i+2 |
|-------|-----|-----|-----|-----|-----|
| j-2   |     |     | 1   |     |     |
| j-1   |     | 2   |     | 2   |     |
| j     | 1   |     | 8   |     | 1   |
| j+1   |     | 2   |     | 2   |     |
| j+2   |     |     | 1   |     |     |

$\times 1/20$

(B)  I S O 8 0 0

|       | i-2 | i-1 | i   | i+1 | i+2 |
|-------|-----|-----|-----|-----|-----|
| j-2   | 1   |     | 2   |     | 1   |
| j-1   |     | 4   |     | 4   |     |
| j     | 2   |     | 8   |     | 2   |
| j+1   |     | 4   |     | 4   |     |
| j+2   | 1   |     | 2   |     | 1   |

$\times 1/36$

(C)  I S O 3 2 0 0

*FIG. 1 7*

HV : index of horizontal
and vertical similarity

DN : index of diagonal similarity

```
            ┌──────────────────────┐
            (   RGB color          )
            (   interpolation      )
            └──────────┬───────────┘
  ┌────────────────────┤
  │                    ▼                      ~S71
  │          ╱─────────────────╲
  │         ╱  High similarity   ╲         NO
  │         ╲  in all directions? ╱──────────────────┐
  │          ╲─────────┬─────────╱                    │
  │               YES  │                              │
  │                    ▼                              │
  │  ┌─────────────────────────────────────────┐     │
  │  │Change weighting coefficients of coeff.   │     │
  │  │ table in accordance with imaging sensi-  │~S73 │
  │  │ tivity                                   │     │
  │  │   Low sensitivity ... Smoothing (low)    │     │
  │  │   High sensitivity ... Smoothing (high)  │     │
  │  └─────────────────┬───────────────────────┘     │
  │  ┌─────────────────────────────────────────┐     │
  │  │ Smooth original signal G by weighted     │~S74 │
  │  │ addition                                 │     │
  │  └─────────────────┬───────────────────────┘     │
  │                    │     ┌──────────────────┐     │
  │                    │     │ Simply use G value│     │
  │                    ◄─────┤  in G position    ◄─────┘
  │                          └──────────────────┘
  │                                ~S72
  │          ╱─────────────────╲
  │    NO   ╱   Are G pixel      ╲
  └────────╱  positions processed  ╲~S75
           ╲   completely?        ╱
            ╲─────────┬──────────╱
                 YES  │
                      ▼
     ┌────────────────────────────────────┐
     │   G interpolation in RB positions   │~S76
     └────────────────┬───────────────────┘
     ┌────────────────────────────────────┐
     │        R interpolation              │~S77
     └────────────────┬───────────────────┘
     ┌────────────────────────────────────┐
     │        B interpolation              │~S78
     └────────────────┬───────────────────┘
                      ▼
                 (   End   )
```

## INTERNATIONAL SEARCH REPORT

| | International application No. |
| --- | --- |
| | PCT/JP2004/009601 |

**A. CLASSIFICATION OF SUBJECT MATTER**
Int.Cl⁷ H04N9/07

According to International Patent Classification (IPC) or to both national classification and IPC

**B. FIELDS SEARCHED**

Minimum documentation searched (classification system followed by classification symbols)
Int.Cl⁷ H04N9/04-9/11

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2002/056604 A1 (Sony Corp.),<br>18 July, 2002 (18.07.02),<br>Full text; all drawings<br>(Family: none) | 1-16,27-30 |
| A | JP 2003-87808 A (Fuji Photo Film Co., Ltd.),<br>20 March, 2003 (20.03.03),<br>Full text; all drawings<br>(Family: none) | 1-16,27-30 |
| A | JP 2001-292455 A (Fuji Photo Film Co., Ltd.),<br>19 October, 2001 (19.10.01),<br>Full text; all drawings<br>(Family: none) | 8-16,30 |

☒ Further documents are listed in the continuation of Box C.　　☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 19 November, 2004 (19.11.04) | 07 December, 2004 (07.12.04) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2004/009601 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 9-233395 A (Toshiba Corp.), 05 September, 1997 (05.09.97), Full text; all drawings (Family: none) | 27-29 |

Form PCT/ISA/210 (continuation of second sheet) (January 2004)

**INTERNATIONAL SEARCH REPORT**

International application No.

PCT/JP2004/009601

| Box No. II        Observations where certain claims were found unsearchable (Continuation of item 2 of first sheet) |
|---|

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box No. III        Observations where unity of invention is lacking (Continuation of item 3 of first sheet) |
|---|

This International Searching Authority found multiple inventions in this international application, as follows:

(See extra sheet.)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.: 1-16, 27-30

**Remark on Protest**          ☐ The additional search fees were accompanied by the applicant's protest.

                              ☐ No protest accompanied the payment of additional search fees.

Form PCT/ISA/210 (continuation of first sheet (2)) (January 2004)

**INTERNATIONAL SEARCH REPORT**

International application No.

PCT/JP2004/009601

Continuation of Box No.III of continuation of first sheet(2)

The inventions of claims are divided into two groups having different "special technical features" as described below. There is no technical relationship among those inventions involving one or more of the same or corresponding special technical feature. Accordingly, the inventions are not so linked as to form a single general inventive concept.

Claims 1-16, 27-30 (claims 28, 29 when referring to one of the claims 1-16, 27)
The device includes a smoothing unit for smoothing the image position having a first color component in a first image by using the first color component of the peripheral pixel and making the first color component after the smoothing the first color component of the pixel position of the second image.
Alternatively, the device includes a smoothing unit for performing smoothing processing on the image data by performing weighted addition between the pixel to be subjected to image data processing and the peripheral pixel and a control unit for modifying the reference range of the peripheral pixels according to the imaging sensitivity at which the image data has been imaged.

Claims 17-26, 31
The device includes: a similarity judgment unit for judging similarity of the image in a plurality of directions in the pixels to be processed in the first image; a coefficient selection unit for selecting a predetermined coefficient table according to the direction judgment of the similarity by the similarity judgment unit; and a conversion processing unit for performing weighted addition of the color component of a local area containing the pixels to be processed, according to the selected coefficient table and generating the new component. According to the analysis of the image structure, the coefficient selection unit modifies the coefficient table to one having different spatial frequency characteristic, thereby adjusting the spatial frequency component of the new component.

Form PCT/ISA/210 (extra sheet) (January 2004)